# EUROPÄISCHE PATENTSCHRIFT

(11) **EP 2 373 695 B1**
(45) Veröffentlichungstag und Bekanntmachung des Hinweises auf die Patenterteilung: **09.01.2013**
(21) Anmeldenummer: 09760533.1
(22) Anmeldetag: 30.11.2009
(51) Int. Cl.: C08F 2/04, C08F 220/58, A01N 25/04

(54) **VERFAHREN ZUR HERSTELLUNG VON STATISTISCHEN RADIKALISCHEN COPOLYMEREN UND AUS DIESEN ERHÄLTLICHE WIRKSTOFFZUSAMMENSETZUNGEN**
METHOD FOR PRODUCING RANDOM RADICAL COPOLYMERS AND CORRESPONDING ACTIVE INGREDIENT COMPOSITIONS OBTAINABLE THEREFROM
PROCÉDÉ POUR PRODUIRE DES COPOLYMÈRES RADICALAIRES STATISTIQUES ET COMPOSITIONS DE PRINCIPES ACTIFS OBTENUES À PARTIR DE CES COPOLYMÈRES

(30) Priorität: 02.12.2008 EP 08170501
(43) Veröffentlichungstag der Anmeldung: 12.10.2011
(73) Patentinhaber: BASF SE, 67056 Ludwigshafen (DE)
(72) Erfinder: TÜRK, Holger, 68161 Mannheim (DE); DIELEMAN, Cedric, F-67630 Scheibenhard (FR); BOHRMANN, Hans-Günter, 67067 Ludwigshafen (DE); KOLTZENBURG, Sebastian, 67125 Dannstadt-Schauernheim (DE)
(86) Internationale Anmeldenummer: PCT/EP2009/066042
(87) Internationale Veröffentlichungsnummer: WO 2010/063672

(56) Entgegenhaltungen:
- EP-A- 1 739 108
- WO-A-2005/046328

## Beschreibung

Die Erfindung betrifft ein Verfahren zur Herstellung von statistischen radikalischen Copolymeren, nach dem Verfahren erhältliche Copolymere, daraus erhältliche agrochemische Wirkstoffzusammensetzungen, Verfahren zu deren Herstellung sowie deren Verwendung zur Bekämpfung von Schadorganismen im Pflanzenschutz.

Viele Wirkstoffe werden idealerweise in Form von wässrigen Systemen bereitgestellt. Dies erschwert naturgemäß eine effektive Anwendung von im Wasser nicht oder nur wenig löslichen Wirkstoffen, da die Bioverfügbarkeit und damit die biologische Aktivität gering sind. Viele Wirkstoffe, vor allem im Agro- und Pharmabereich sind von hydrophober Natur und unterliegen deshalb dem genannten Anwendungsproblem.

Häufig werden deshalb Wirkstoffe mit einer Matrix in Lösung zusammengebracht, um dann in einem Sprühtrockungsschritt eine feste Wirkstoffformulierung in Form eines Kompositpulvers zu erhalten, welches in wässrigem Milieu dispergiert werden kann.

Als Matrixmaterialien können Kohlenhydrate, Proteine, anorganische Salze, Harze, Lipide sowie olefinische Polymere verwendet werden. Zur Redispergierung kann es erforderlich sein, weitere Komponenten, wie Stabilisatoren und Tenside, hinzuzufügen.

Die WO 2005/046328 beschreibt Formulierungen, die neben einem oder mehreren Wirkstoffen ein statistisches radikalisches Copolymer enthalten. Die dort beschriebenen Copolymere werden durch Copolymerisation von 2-Acrylamido-2-methyl-1-propansulfonsäure (AMPS), n-Alkylacrylat und Phenoxyethylacrylat (POEA) hergestellt. Die Copolymerisation wird dabei in aprotischen, dipolaren Lösungsmitteln, wie beispielsweise Dimethylformamid (DMF), N-Methylpyrrolidon (NMP) oder Dimethylsulfoxid (DMSO) in Gegenwart eines Initiators für die radikalische Polymerisation, wie beispielsweise Azo-bis-(isobutyronitril) (AlBN) durchgeführt.

Obwohl mit den beschriebenen Copolymeren und deren Herstellungsverfahren bereits gute Ergebnisse erzielt werden können, bleibt doch ein Raum für Verbesserungen hinsichtlich der Verfahrensführung und Ausgangsstoffe. Insbesondere ist es wünschenswert, die synthetisierten Copolymere frei von Resten hochsiedender organischer Lösungsmittel zu erhalten.

Aufgabe der Erfindung ist es, ein Verfahren zur Herstellung eines statistischen radikalischen Copolymers mit einem verbesserten Eigenschaftsprofil bereitzustellen, bei dem die erhaltenen Copolymere und diese enthaltende agrochemische Wirkstoffzusammensetzungen frei von Resten hochsiedender organischer Lösungsmittel sind.

Es wurde gefunden, dass statistische radikalische Copolymere auf Basis von sulfonsäurehaltigen ungesättigten Monomeren und Alkylacrylaten vorteilhaft erhalten werden, indem man die Monomere und den verwendeten Initiator in einem Lösungsmittelgemisch, enthaltend Wasser und ein in Wasser lösliches organisches Lösungsmittel mit einem Siedepunkt kleiner 140 °C, oder unter Erhitzen in einem oder mehreren reinen Alkoholen löst und in Lösung polymerisiert, wobei das gebildete Copolymer ebenfalls löslich ist.

In der EP-A 1 739 108 sind Verdicker für wässrige Systeme auf Basis von sulfonsäurehaltigen ungesättigten Monomeren, Acrylamiden, hydrophoben (Meth)acrylaten und Vernetzern beschrieben, die ein Molgewicht von 250 000 bis 10 000 000 aufweisen und durch Fällungspolymerisation unter Neutralisation der Säuregruppen hergestellt werden. Solche Verdicker sind als Dispergiermittel für hydrophobe agrochemische Wirkstoffe nicht geeignet.

Gegenstand der Erfindung ist somit ein Verfahren zur Herstellung von statistischen radikalischen Copolymeren, wobei man
a) mindestens eine olefinisch ungesättigte Sulfonsäure der Formel (I), 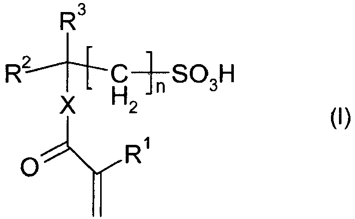 wobei
   - n: 0 bis 10;
   - X: O oder NR⁴;
   - R¹: Wasserstoff oder Methyl;
   - R², R³: unabhängig voneinander Wasserstoff oder C₁ bis C₆-Alkyl und
   - R⁴: Wasserstoff, Alkyl, Aryl, Alkylaryl, Arylalkyl, Alkoxyalkyl, Aryloxyalkyl, Alkoxyaryl, Hydroxyalkyl, (Di)Alkylaminoalkyl, (Di)Alkylaminoaryl, (Di)Arylaminoalkyl, Alkylarylaminoalkyl oder Alkylarylaminoaryl, wobei die Arylreste einfach oder mehrfach substituiert sein können,
   bedeuten, Salze davon oder Mischungen aus Säure und Salzen und
b) mindestens zwei strukturell unterschiedliche olefinisch ungesättigte Monomere der Formel (II), 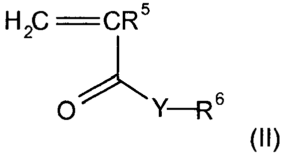 wobei
   - Y: O oder NR⁷;
   - R⁵: Wasserstoff oder Methyl;
   - R⁶: Alkyl, Hydroxyalkyl oder (Di)Alkylaminoalkyl und
   - R⁷: Wasserstoff, Alkyl, Aryl, Alkylaryl, Arylalkyl, Alkoxyalkyl, Aryloxyalkyl, Alkoxyaryl, Hydroxyalkyl, (Di)Alkylaminoalkyl, (Di)Alkylaminoaryl, (Di)Arylaminoalkyl, Alkylarylaminoalkyl oder Alkylarylaminoaryl, wobei die Arylreste einfach oder mehrfach substituiert sein können,
   bedeuten und
c) gegebenenfalls ein oder mehrere olefinisch ungesättigte Monomere die strukturell von den Komponenten (a) und (b) verschieden sind,
d) mindestens einen Initiator
entweder (i) in einem Lösungsmittelgemisch, enthaltend Wasser und ein in Wasser lösliches organisches Lösungsmittel mit einem Siedepunkt kleiner 140 °C, löst oder (ii) in einem oder mehreren reinen Alkoholen durch Erhitzen löst und bevorzugt in Lösung polymerisiert, wobei das gebildete Copolymer vorzugsweise ebenfalls gelöst bleibt.

Weiterhin Gegenstand der Erfindung sind neue statistische radikalische Copolymere, erhältlich nach dem erfindungsgemäßen Verfahren, daraus erhältliche agrochemische Wirkstoffzusammensetzungen, ein Verfahren zur Herstellung dieser agrochemischen Wirkstoffzusammensetzungen sowie die Verwendung der agrochemischen Wirkstoffzusammensetzungen zur Bekämpfung von Schadorganismen im Pflanzenschutz.

Durch das erfindungsgemäße Verfahren werden Copolymere und Wirkstoffzusammensetzungen erhalten, die frei von hochsiedenden organischen Lösungsmitteln sind. Au-βerdem zeigen die erfindungsgemäßen Copolymere und daraus erhältliche Wirkstoffzusammensetzungen eine verbesserte Stabilität und eine bessere Bindung des Wirkstoffs an die Polymerbasis.

Alle angegebenen Siedepunkte beziehen sich erfindungsgemäß auf Normaldruck (1 bar).

Die erfindungsgemäß erhältlichen Copolymere weisen im Allgemeinen ein mittleres Molgewicht M_{W} im Bereich von 2500 bis 100 000, bevorzugt 5000 bis 50 000, besonders bevorzugt 5000 bis 30 000 auf. Das mittlere Molgewicht M_{N} liegt im Allgemeinen im Bereich von 1000 bis 50 000, bevorzugt 2000 bis 15 000.

Der Anteil an freien Säuregruppen (bezogen auf die Gesamtanzahl an Säuregruppen der Komponenten (a) und (c)) beträgt vorzugsweise mindestens 50 %, besonders bevorzugt mindestens 70 %, ganz besonders bevorzugt 100 %.

Bevorzugte Copolymere sind solche mit einem mittleren Molgewicht M_{W} im Bereich von 2500 bis 100 000, bevorzugt 5000 bis 50 000, besonders bevorzugt 5000 bis 30 000 und einem Anteil an freien Säuregruppen (bezogen auf die Gesamtanzahl an Säuregruppen in den Komponenten (a) und (c)) von mindestens 50 %, bevorzugt 70 %, besonders bevorzugt 100 %.

Für die im erfindungsgemäßen Verfahren eingesetzten olefinisch ungesättigten Monomere der Formel (I) und der Formel (II) kommen als Alkylreste allein oder in Kombination geradekettiges, verzweigtes oder cyclisches C₁- bis C₂₀-Alkyl in Betracht. Insbesondere seien genannt Methyl, Ethyl, Propyl, 1-Methylethyl, Butyl, 1-Methylpropyl, 2-Methylpropyl, 1,1-Dimethylethyl, Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 1,1,2-Trimethylpropyl, 1,2,2-Trimethylpropyl, 1-Ethyl-1-Methylpropyl, 1-Ethyl-2-Methylpropyl, Cyclohexyl, n-Heptyl, n-Octyl, 2-Ethylhexyl, Decyl, Isodecyl, Undecyl, Dodecyl, Tridecyl, Tetradecyl, Pentadecyl, Hexadecyl, Heptadecyl und Octadecyl.

Als Arylreste kommen allein oder in Kombination C₆-C₂₀-Aryl in Betracht. Insbesondere seien genannt unsubstituierte einkernige C₆- bis C₁₀-Aryle, unsubstituierte mehrkernige C₆- bis C₁₀-Aryle, sowie substituierte einkernige C₆- bis C₁₀-Aryle und substituierte mehrkernige C₆- bis C₁₀-Aryle, wie Phenyl und Naphthyl.

Die angegebenen Bereiche und Bevorzugungen der Alkyl- und Arylgruppen gelten auch für die entsprechenden, Alkyl- und/oder Arylgruppen enthaltenden zusammengesetzten funktionellen Gruppen, wie Alkylaryl, Arylalkyl, Alkoxy, Aryloxy, Hydroxyalkyl und substituierte Aminogruppen.

Als Substituenten der Arylgruppen eignen sich beispielsweise Halogen, (C₁-C₄)-Alkyl, (C₁-C₄)-Haloalkyl, (C₁-C₄)-Alkoxy, (C₁-C₄)-Haloalkoxy, OH, Aryl und Aryloxy, wobei Phenyloxy besonders bevorzugt ist.

Gegebenenfalls eingesetzte Monomere der Komponente (c) sind beispielsweise Acrylsäure, Methacrylsäure und Vinylsulfonsäure, gegebenenfalls auch in Salzform, vinylaromatische Monomere, wie Styrol und Styrolderivate, z. B. α-Methylstyrol, Vinyltoluol, ortho-, meta- und para-Methylstyrol, Ethylvinylbenzol, Vinylnaphthalin, Vinylxylol sowie die entsprechenden halogenierten vinylaromatischen Monomere, Nitro-, Alkoxy-, Haloalkyl-, Carbalkoxy-, Carboxy-, Amino- und Alkylaminogruppen tragende vinylaromatischen Monomere, α-Olefine, wie Ethen, Propen, 1-Buten, 1-Penten, 1-Hexen, Isobuten, langkettige (C₁₀-C₂₀)Alkyl-α-Olefine, Diene, wie Butadien und Isopren, Vinylalkoholester, wie Vinylacetat, Vinylhalogenide, wie Vinylchlorid, Vinylbromid, Vinylfluorid, Vinylidenchlorid, Vinylidenfluorid, Vinylidenbromid, Vinylnitril, Vinylcarboxylate, 1-Vinylamide, wie 1-Vinylpyrrolidon, 1-Vinylpiperidon, 1-Vinylcaprolactam, 1-Vinylformamid, 1-Vinylacetamid oder 1-Methyl-1-vinylacetamid, N-Vinylimidazol, C₁- bis C₂₄-Alkylester und ein- und zweifach substituierte und unsubstituierte C₁- bis C₂₄-Alkylamide von Fumar-, Malein- und Itaconsäure, Anydride, wie Maleinsäureanhydrid, ungesättigte Aldehyde, wie Acrolein, ungesättigte Ether, wie 1,4-Cyclohexandimethanoldivinylether, Butandioldivinylether, Butandiolmonovinylether, Cyclohexylvinylether, Diethylenglykoldivinylether, Butandiolmonovinylether, Ethylenglykolmonovinylether, Ethylvinylether, Methylvinylether, n-Butylvinylether, Octadecylvinylether, Triethylenglykolvinylmethylether, Vinylisobutylether, Vinyl-(2-ethylhexyl)ether, Vinylpropylether, Vinylisopropylether, Vinyldodecylether, Vinyl-tert-butylether, Hexandioldivinylether, Hexandiolmonovinylether, Diethylenglykolmonovinylether, Diethylaminoethylvinylether, Polytetrahydrofuran-290-divinylether, Tetraethylenglykoldivinylether, Ethylenglykolbutylvinylether, Ethylenglykoldivinylether, Triethylenglykoldivinylether, Trimethylolpropantrivinylether und Aminopropylvinylether.

Unter einem als "radikalisch" bezeichneten Polymer wird ein durch radikalische Polymerisation hergestelltes Polymer verstanden.

Unter einem als "statistisch" bezeichneten Copolymer wird ein Copolymer verstanden, bei dem der Einbau der Comonomere in das aus der Copolymerisation resultierende Makromolekül statistisch erfolgt. Entsprechendes gilt auch für Copolymere, die aus mehr als zwei Monomerarten bestehen.

Die Sulfonsäuren der Formel (I) - wie auch andere Säuren der Komponenten (c) - können in Säure- oder Salzform oder als Mischung von Säure- und Salzform vorliegen, wobei - wie oben beschrieben - die Säureform bevorzugt ist. Alternativ besteht die Möglichkeit, die Salzform der Monomere zu verwenden und nachträglich die Säuregruppen der im Polymer eingebauten Monomereinheiten partiell oder komplett zu protonieren bzw. die Säureform der Monomere zu verwenden und nachträglich die Säuregruppen der im Polymer eingebauten Monomereinheiten partiell oder komplett zu neutralisieren.

Stellvertretend für alle diese Formen wird der Begriff "Sulfonsäure" bzw. "Säure" verwendet.

Salze der Sulfon- und anderer Säuren sind vorzugsweise Metallsalze, insbesondere Alkalimetallsalze, wie Lithium-, Natrium- und Kaliumsalze, oder Ammoniumsalze.

In einer bevorzugten Ausführungsform werden in dem erfindungsgemäßen Verfahren
a) mindestens eine olefinisch ungesättigte Sulfonsäure der Formel (I), 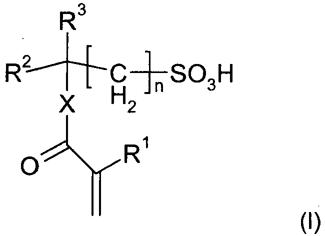 wobei
   - X: NH oder Sauerstoff;
   - R¹: Methyl oder Wasserstoff;
   - R² und R³: Methyl oder Wasserstoff und
   - n: 1
   bedeuten,
b1) mindestens ein olefinisch ungesättigtes Monomer der Formel (IIa), 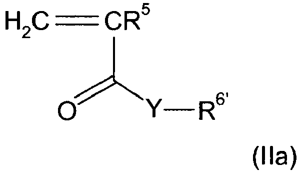 wobei
   - Y: Sauerstoff oder NR⁷;
   - R⁵: Wasserstoff oder Methyl;
   - R^{6'}: C₁-C₆-Alkyl, wie Methyl, Ethyl, Propyl, 1-Methylethyl, Butyl, 1-Methylpropyl, 2-Methylpropyl, 1,1-Dimethylethyl, Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2 Dimethylbutyl, 2,3-Dimethylbutyl, 3,3-Dimethylbutyl, 1-Ethylbutyl, 1,1,2-Trimethylpropyl, 1,2,2-Trimethylpropyl, 1-Ethyl-1-Methylpropyl, 1-Ethyl-2-Methylpropyl und Cyclohexyl, und
   - R⁷: Wasserstoff, Alkyl, Aryl, Alkylaryl, Arylalkyl, Alkoxyalkyl, Aryloxyalkyl, Alkoxyaryl, Hydroxyalkyl, (Di)Alkylaminoalkyl, (Di)Alkylaminoaryl, (Di)Arylaminoalkyl, Alkylarylaminoalkyl oder Alkylarylaminoaryl, wobei die Arylreste einfach oder mehrfach substituiert sein können,
   bedeuten,
b2) mindestens ein olefinisch ungesättigtes Monomer der Formel (IIb), 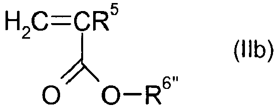 wobei
   - R⁵: Methyl oder Wasserstoff und
   - R^{6"}: C₇-C₂₀-Alkyl, wie n-Heptyl, n-Octyl, 2-Ethylhexyl, Decyl, Isodecyl, Undecyl, Dodecyl, Tridecyl, Tetradecyl, Pentadecyl, Hexadecyl, Heptadecyl, Octadecyl und Eicosyl,
   bedeuten,
c) gegebenenfalls ein oder mehrere olefinisch ungesättigte Monomere, die strukturell von den Komponenten (a) und (b) verschieden sind, und
d) mindestens ein Initiator
eingesetzt.
In einer besonders bevorzugten Ausführungsform werden in dem erfindungsgemäßen Verfahren
a) mindestens eine olefinisch ungesättigte Sulfonsäure der Formel (I), 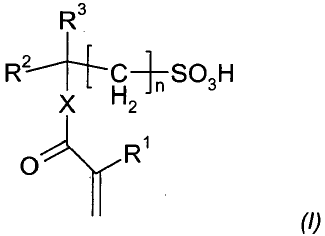 wobei
   - X: NH oder Sauerstoff;
   - R¹: Methyl oder Wasserstoff;
   - R² und R³: Methyl oder Wasserstoff und
   - n: 1
   bedeuten,
b1) mindestens ein olefinisch ungesättigtes Monomer der Formel (IIa), 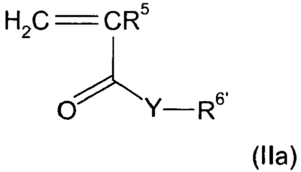 wobei
   - Y: Sauerstoff oder NR⁷;
   - R⁵: Wasserstoff oder Methyl;
   - R^{6'}: C₁-C₆-Alkyl, wie Methyl, Ethyl, Propyl, 1-Methylethyl, Butyl, 1-Methylpropyl, 2-Methylpropyl, 1,1-Dimethylethyl, Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2 Dimethylbutyl, 2,3-Dimethylbutyl, 3,3-Dimethylbutyl, 1-Ethylbutyl, 1,1,2-Trimethylpropyl, 1,2,2-Trimethylpropyl, 1-Ethyl-1-Methylpropyl, 1-Ethyl-2-Methylpropyl und Cyclohexyl, und
   - R⁷: Wasserstoff, Alkyl, Aryl, Alkylaryl, Arylalkyl, Alkoxyalkyl, Aryloxyalkyl, Alkoxyaryl, Hydroxyalkyl, (Di)Alkylaminoalkyl, (Di)Alkylaminoaryl, (Di)Arylaminoalkyl, Alkylarylaminoalkyl oder Alkylarylaminoaryl, wobei die Arylreste einfach oder mehrfach substituiert sein können,
   bedeuten,
b2) mindestens ein olefinisch ungesättigtes Monomer der Formel (IIb), 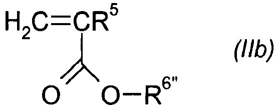 wobei
   - R⁵: Methyl oder Wasserstoff und
   - R^{6"}: C₇-C₂₀-Alkyl, wie n-Heptyl, n-Octyl, 2-Ethylhexyl, Decyl, Isodecyl, Undecyl, Dodecyl, Tridecyl, Tetradecyl, Pentadecyl, Hexadecyl, Heptadecyl, Octadecyl und Eicosyl,
   bedeuten,
c) gegebenenfalls ein oder mehrere olefinisch ungesättigte Monomere, die strukturell von den Komponenten (a) und (b) verschieden sind, aus der Gruppe Acrylsäure, Methacrylsäure, Vinylsulfonsäure, gegebenenfalls auch in Salzform, Styrol, α-Methylstyrol, Vinyltoluol, ortho-, meta- und para-Methylstyrol, Ethylvinylbenzol, Vinylnaphthalin, Vinylxylol, Ethen, Propen, 1-Buten, 1-Penten, 1-Hexen, Isobuten, langkettige (C₁₀-C₂₀)Alkyl-α-Olefine, Butadien, Isopren, Vinylacetat, Vinylchlorid, Vinylbromid, Vinylfluorid, Vinylidenchlorid, Vinylidenfluorid, Vinylidenbromid, Vinylnitril, Vinylcarboxylate, 1-Vinylpyrrolidon, 1-Vinylpiperidon, 1-Vinylcaprolactam, 1-Vinylformamid, 1-Vinylacetamid, 1-Methyl-1-vinylacetamid, N-Vinylimidazol, C₁- bis C₂₄-Alkylester und ein- und zweifach substituierte und unsubstituierte C₁- bis C₂₄-Alkylamide von Fumar-, Malein- und Itaconsäure, Maleinsäureanhydrid, Acrolein, Butandiolmonovinylether, Cyclohexylvinylether, Butandiolmonovinylether, Ethylenglykolmonovinylether, Ethylvinylether, Methylvinylether, n-Butylvinylether, Octadecylvinylether, Triethylenglykolvinylmethylether, Vinylisobutylether, Vinyl-(2-ethylhexyl)ether, Vinylpropylether, Vinylisopropylether, Vinyldodecylether, Vinyl-tert-butylether, Hexandiolmonovinylether, Diethylenglykolmonovinylether, Diethylaminoethylvinylether, Ethylenglykolbutylvinylether und Aminopropylvinylether sowie
d) mindestens ein Initiator
eingesetzt.
In einer ganz besonders bevorzugten Ausführungsform werden in dem erfindungsgemäßen Verfahren
a) mindestens eine olefinisch ungesättigte Sulfonsäure der Formel (I), 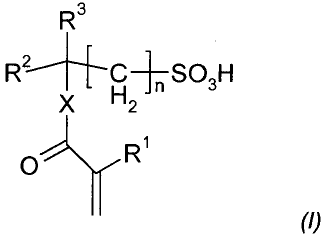 wobei
   - X: NH oder Sauerstoff;
   - R¹: Methyl oder Wasserstoff;
   - R² und R³: Methyl oder Wasserstoff und
   - n: 1
   bedeuten,
b1) mindestens ein olefinisch ungesättigtes Monomer der Formel (IIa), 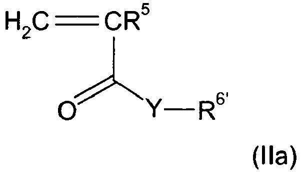 wobei
   - Y: Sauerstoff;
   - R⁵: Wasserstoff oder Methyl;
   - R^{6'}: C₁-C₆-Alkyl, wie Methyl, Ethyl, Propyl, 1-Methylethyl, Butyl, 1-Methylpropyl, 2-Methylpropyl, 1,1-Dimethylethyl, Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2 Dimethylbutyl, 2,3-Dimethylbutyl, 3,3-Dimethylbutyl, 1-Ethylbutyl, 1,1,2-Trimethylpropyl, 1,2,2-Trimethylpropyl, 1-Ethyl-1-Methylpropyl, 1-Ethyl-2-Methylpropyl und Cyclohexyl, und
   - R⁷: Wasserstoff, Alkyl, Aryl, Alkylaryl, Arylalkyl, Alkoxyalkyl, Aryloxyalkyl, Alkoxyaryl, Hydroxyalkyl, (Di)Alkylaminoalkyl, (Di)Alkylaminoaryl, (Di)Arylaminoalkyl, Alkylarylaminoalkyl oder Alkylarylaminoaryl, wobei die Arylreste einfach oder mehrfach substituiert sein können,
   bedeuten,
b2) mindestens ein, bevorzugt zwei olefinisch ungesättigte Monomere der Formel (IIIb), 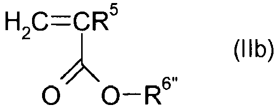 wobei
   - R⁵: Methyl oder Wasserstoff und
   - R^{6"}: C₇-C₂₀-Alkyl, wie n-Heptyl, n-Octyl, 2-Ethylhexyl, Decyl, Isodecyl, Undecyl, Dodecyl, Tridecyl, Tetradecyl, Pentadecyl, Hexadecyl, Heptadecyl, Octadecyl und Eicosyl,
   bedeuten,
c) gegebenenfalls ein oder mehrere olefinisch ungesättigte Monomere, die strukturell von den Komponenten (a) und (b) verschieden sind, aus der Gruppe Acrylsäure, Methacrylsäure, Vinylsulfonsäure, gegebenenfalls auch in Salzform, Styrol, α-Methylstyrol, Vinyltoluol, ortho-, meta- und para-Methylstyrol, Ethylvinylbenzol, Vinylnaphthalin, Vinylxylol, Vinylacetat, Vinylchlorid, Vinylbromid, Vinylfluorid, Vinylidenchlorid, Vinylidenfluorid, Vinylidenbromid, Vinylnitril, Vinylcarboxylate, 1-Vinylpyrrolidon, 1-Vinylpiperidon, 1-Vinylcaprolactam, 1-Vinylformamid, 1-Vinylacetamid oder 1-Methyl-1-vinylacetamid, n-Vinylimidazol, C₁- bis C₂₄-Alkylester und ein- und zweifach substituierte und unsubstituierte C₁- bis C₂₄-Alkylamide von Fumar-, Malein- und Itaconsäure und Maleinsäureanhydrid sowie
d) mindestens ein Initiator
eingesetzt.

In einer weiteren bevorzugten Ausführungsform werden als Komponente (b2) zwei strukturell verschiedene olefinisch ungesättigte Monomere, (b2') und (b2"), der Formel (IIb) eingesetzt.

In einer besonders bevorzugten Ausführungsform wird als Monomerkomponente (b2') ein olefinisch ungesättigtes Monomer der Formel (IIb), das als Substituent R^{6"} einen Alkylrest mit 7 bis 12 C-Atomen enthält, und als Monomerkomponente(b2") ein olefinisch ungesättigtes Monomer der Formel (IIb), das als Substituent R^{6"} einen Alkylrest mit 13 bis 20 C-Atomen enthält, eingesetzt.

Durch die Verwendung zweier verschiedener Monomere (b2) lassen sich Copolymeren mit mehr als drei Komponenten herstellen. Hierdurch kann die Amphiphilie und damit das Dispergiervermögen der Makromoleküle hinsichtlich der Verwendung in agrochemischen Wirkstoffformulierungen besser an die jeweiligen Anforderungen angepasst werden, als dies bei der Synthese ternärer Copolymere der Fall wäre.

Durch die ganz besonders bevorzugte Verwendung eines olefinisch ungesättigten Monomers der Formel (IIb), das als Substituent R^{6"} einen Alkylrest mit 7 bis 12 C-Atomen enthält, sowie eines olefinisch ungesättigten Monomers der Formel (IIb), das als Substiuent R^{6"} einen Alkylrest mit 13 bis 20 C-Atomen enthält, gelingt dies darüberhinaus in besonders gutem Maße.

In einer weiteren bevorzugten Ausführungsform werden als Komponente (c) Acrylsäure und/oder Methacrylsäure eingesetzt.

In einer weiteren bevorzugten Ausführungsform werden als Komponente (c) keine Aryloxyacrylate und -methacrylate eingesetzt.

In einer besonders bevorzugten Ausführungsform werden als Ausgangsmonomere ausschließlich Verbindungen der Formel (I) und (II), insbesondere der Formel (I), (IIa) und (IIb) eingesetzt.

In einer weiteren besonders bevorzugten Ausführungsform werden in dem erfindungsgemäßen Verfahren
a) mindestens eine olefinisch ungesättigte Sulfonsäure aus der Gruppe 2-Acrylamido-2-methylpropansulfonsäure (AMPS) (la) (dies ergibt sich aus Formel (I) für X=NH, R¹=Wasserstoff, R²=R³= Methyl und n=1) und 2-Sulfoethylmethacrylat (SEMA) (Ib) (dies ergibt sich aus Formel (I) für X=Sauerstoff, R¹=Methyl, R²=R³=Wasserstoff, n=1) 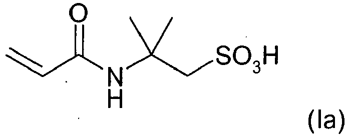 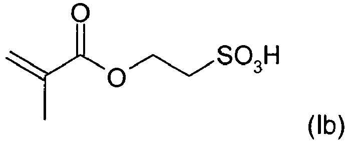
b1) mindestens ein olefinisch ungesättigtes Monomer der Formel (IIa),
   wobei
   - Y: Sauerstoff;
   - R⁴: Wasserstoff oder Methyl und
   - R^{6'}: Methyl, Ethyl, Propyl oder Butyl
   bedeuten,
b2) mindestens ein, bevorzugt mindestens zwei, olefinisch ungesättigte Monomere der Formel (IIb),
   wobei
   - Y: Sauerstoff;
   - R¹⁰: Wasserstoff und
   - R^{6"}: Dodecyl, Tetradecyl, Hexadecyl, Octadecyl oder Eicosyl
   bedeuten,
c) gegebenenfalls Acrylsäure und/oder Methacrylsäure und
d) mindestens ein Initiator
eingesetzt.

In einer bevorzugten Ausführungsform werden die Komponente (a) in Mengenverhältnissen von 10 bis 80 Gew.-%, besonders bevorzugt von 25 bis 70 Gew.-%, insbesondere bevorzugt von 30 bis 65 Gew.-%, die Komponente (b1) in Mengenverhältnissen von 20 bis 88 Gew.-%, die Komponente (b2) in Mengenverhältnissen von 2 bis 30 Gew.-% und die Komponente (c) in Mengenverhältnissen von 0 bis 50 Gew.-%, bezogen auf die Gesamtmenge der Ausgangsmonomere, eingesetzt.

In einer besonders bevorzugten Ausführungsform werden die Komponente (a) in Mengenverhältnissen von 20 bis 60 Gew.-%, die Komponente (b1) in Mengenverhältnissen von 30 bis 80 Gew.-%, die Komponente (b2) in Mengenverhältnissen von 5 bis 25 Gew.-% und die Komponente (c) in Mengenverhältnissen von 0 bis 40 Gew.-% eingesetzt.

Bevorzugt beträgt die Gesamtmenge der Monomeren (a) und (c), die eine Säuregruppe tragen, 20 bis 60 Gew.-%.

In einer weiteren besonders bevorzugten Ausführungsform werden als Komponente (a) SEMA (Ib), als Komponente (b1) Methylmethacrylat (MMA), als Komponente (b2) Dodecylacrylat und/oder weiteres hydrophobes Acrylat, bei dem R^{6"} C₁₃-C₂₀-Alkyl bedeutet, und als Komponente (c) gegebenenfalls Acrylsäure und/oder Methacrylsäure eingesetzt.

In einer weiteren besonders bevorzugten Ausführungsform werden im erfindungsgemäßen Verfahren als Komponente (a) AMPS (la), als Komponente (b1) MMA und als Komponente (b2) Dodecylacrylat und/oder weiteres hydrophobes Acrylat, bei dem R^{6"} C₁₃-C₂₀-Alkyl bedeutet, und als Komponente (c) gegebenenfalls Acrylsäure und/oder Methacrylsäure eingesetzt.

In einer insbesondere bevorzugten Ausführungsform werden im erfindungsgemäßen Verfahren als Komponente (a) SEMA (Ib), als Komponente (b1) MMA und als Komponente (b2) Dodecylacrylat und weiteres hydrophobes Acrylat, bei dem R^{6"} C₁₃-C₂₀-Alkyl bedeutet, und als Komponente (c) gegebenenfalls Acrylsäure und/oder Methacrylsäure eingesetzt.

In einer weiteren insbesondere bevorzugten Ausführungsform werden im erfindungsgemäßen Verfahren als Komponente (a) AMPS (la), als Komponente (b1) MMA, als Komponente (b2) Dodecylacrylat und weiteres hydrophobes Acrylat, bei dem R^{6"} C₁₃-C₂₀-Alkyl bedeutet, und als Komponente (c) gegebenenfalls Acrylsäure und/oder Methacrylsäure eingesetzt.

Erfindungsgemäß werden die statistischen radikalischen Copolymere durch radikalische Polymerisation entweder (i) in einem Lösungsmittelgemisch, bestehend aus Wasser und mindestens einem organischen Lösungsmittel mit einem Siedepunkt < 140°C oder (ii) in einem oder mehreren reinen Alkoholen, erhalten. Es können die üblichen Verfahren zu einer freien oder kontrollierten, vorzugsweise freien, radikalischen Polymerisation eingesetzt werden, wobei das Reaktionsgemisch mindestens einen Initiator enthält.

Bevorzugt wird das Lösungsmittelgemisch so gewählt, dass die Komponenten (a), (b), (d) und gegebenenfalls (c) sowie das gebildete Copolymer löslich sind.

Löslich umfasst dabei im Sinne der Erfindung sowohl eine echte Lösung als auch eine Dispersion, die so fein verteilt ist, dass keine Trübung entsteht.

Die Polymerisation kann als Batchreaktion, in semikontinuierlicher oder kontinuierlicher Fahrweise durchgeführt werden.

Die Reaktionszeiten liegen im Allgemeinen im Bereich zwischen 1 und 48 h, bevorzugt im Bereich von 2 bis 24 h und insbesondere bevorzugt im Bereich von 4 bis 24 h. Der Temperaturbereich, in dem die Reaktion durchgeführt werden kann, reicht im Allgemeinen von 20 bis 200 °C, bevorzugt von 30 bis 120 °C und insbesondere bevorzugt von 40 bis 90 °C.

Geeignete Polymerisationskonzentrationen liegen im Bereich von 1-50 Gew.-%, bevorzugt im Bereich von 10-40 Gew.-%, insbesondere bevorzugt im Bereich von 15-35 Gew.-%. Unter Polymerisationskonzentration wird das Gewicht aller eingesetzten Monomere (Komponenten (a), (b) und gegebenenfalls (c)) bezogen auf das Gesamtgewicht aller im Verfahren befindlichen Stoffe, d. h. die Summe aller eingesetzten Monomere (Komponenten (a), (b) und gegebenenfalls (c)), des Initiators, der Lösungsmittel und gegebenenfalls weiteren Hilfs- und Zusatzstoffe, verstanden.

Als Initiator (Komponente (d)) für die radikalische Polymerisation werden übliche radikalbildende Substanzen eingesetzt. Bevorzugt wird der Initiator aus der Gruppe der Azo-Verbindungen, der Peroxid-Verbindungen oder der Hydroperoxid-Verbindungen gewählt. Beispielsweise seien genannt Acetylperoxid, Benzoylperoxid, Lauroylperoxid, tert-Butylperoxyisobutyrat, Caproylperoxid, Cumolhydroperoxid, Azo-bis(isobutyronitril), 2,2-Azo-bis(2-methylbutyronitril), 2,2'-Azo-bis(2-methylpropionamidin)dihydrochlorid und 2,2'-Azo-bis[2-(2-imidazolin-2-yl)propan]dihydrochlorid. Selbstverständlich können auch Initiatormischungen eingesetzt werden.

Besonders bevorzugt wird der Initiator aus der Gruppe 2,2'-Azo-bis(2-methylbutyronitril) (unter der Handelsbezeichnung WAKO^{®} V-59 von Wako Chemicals USA Inc. kommerziell erhältlich), 2,2'-Azo-bis(2,4-dimethyl valeronitril) (unter der Handelsbezeichnung WAKO^{®} V-65 von Wako Chemicals USA Inc. kommerziell erhältlich), 2,2'-Azo-bis(4-methoxy-2,4-dimethyl valeronitril) (unter der Handelsbezeichnung WA-KO V-70 von Wako Chemicals USA Inc. kommerziell erhältlich), 2,2'-Azo-bis[2-(2-imidazolin-2-yl)propan]dihydrochlorid (unter der Handelsbezeichnung WAKO^{®} VA-044 von Wako Chemicals USA Inc. kommerziell erhältlich), 2,2'-Azo-bis(2-methylpropionamidin)dihydrochlorid (unter der Handelsbezeichnung WAKO^{®} V-50 von Wako Chemicals USA Inc. kommerziell erhältlich) und 2,2'-Azo-bis(isobutyronitril) (AIBN) gewählt. Am meisten bevorzugt sind 2,2'-Azo-bis(2-methylbutyronitril) (WAKO^{®} V-59) und 2,2'-Azo-bis(isobutyronitril) (AIBN).

Die Polymerisation wird in Lösung durchgeführt.

Nach einer ersten Variante des erfindungsgemäßen Verfahrens wird die Polymerisation in einem Lösungsmittelgemisch, enthaltend Wasser und mindestens ein in Wasser lösliches, organisches Lösungsmittel mit einem Siedepunkt kleiner 140 °C durchgeführt (Variante (i)). Variante (i) ist bevorzugt.

Nach einer weiteren Variante des erfindungsgemäßen Verfahrens wird die Polymerisation in einem oder mehreren reinen Alkoholen durchgeführt (Variante (ii)).

Lösungsmittelgemisch "enthaltend Wasser" ist im Rahmen der Erfindung so zu verstehen, dass in der Reaktionsmischung mindestens 1 Gew.-% Wasser, bezogen auf das Gesamtgewicht aller im Verfahren befindlicher Stoffe, d. h. bezogen auf die Summe aller eingesetzten Monomere (Komponenten (a), (b) und gegebenenfalls (c)) des Initiators, der Lösungsmittel und gegebenenfalls weiteren Hilfs- und Zusatzstoffe, vorhanden ist. Bevorzugt sind 1 bis 80 Gew.-%, besonders bevorzugt 1 bis 50 Gew.-%, ganz besonders bevorzugt 1 bis 30 Gew.-%, insbesondere 5 bis 30 Gew.-% Wasser vorhanden.

Als organische Lösungsmittel eignen sich prinzipiell alle Lösungsmittel mit einem Siedepunkt kleiner 140 °C. Bevorzugt sind Lösungsmittel, die mit Wasser mischbar sind und einen Siedepunkt ≤ 120 °C aufweisen. Besonders bevorzugte organische Lösungsmittel sind Alkohole, Ether und Nitrile. Als besonders bevorzugte Alkohole seien beispielsweise Methanol, Ethanol, n-Propanol (1-Propanol), iso-Propanol (2-Propanol), n-Butanol (1-Butanol), sec-Butanol (2-Butanol), tert-Butanol (2-Methylpropan-2-ol), 1-Pentanol, 2-Pentanol, 3-Pentanol, 2-Methylbutanol, 3-Methylbutan-2-ol und 2,2-Dimethylpropanol genannt.

Ganz besonders bevorzugte Alkohole sind Methanol, Ethanol, n-Propanol (1-Propanol) und iso-Propanol (2-Propanol). Insbesondere bevorzugt ist iso-Propanol (2-Propanol).

Als Ether sind prinzipiell alle einfachen oder gemischten Ether geeignet, die durch Reaktion der oben genannten Alkohole zugänglich sind. Weiter sind zyklische Ether, wie Tetrahydrofuran, Tetrahydropyran und Dioxan geeignet. Besonders geeignete Ether sind Diethylether, Tetrahydrofuran und Dioxan. Insbesondere geeignet ist Tetrahydrofuran, insbesondere als Cosolvent.

Geeignete Nitrile sind Acetonitril und Propionnitril. Insbesondere geeignet ist Acetonitril.

Als Lösungsmittelgemisch sind zum einen binäre Gemische aus Wasser und einem Alkohol bevorzugt. Besonders bevorzugt ist eine binäre Mischung aus Wasser und iso-Propanol oder aus Wasser und Methanol. Insbesondere ist eine binäre Mischung aus Wasser und iso-Propanol (2-Propanol) bevorzugt.

Zum anderen bevorzugt sind ternäre Gemische aus Wasser, einem Alkohol und einem Ether, wobei das Gemisch Wasser, iso-Propanol und Tetrahydrofuran insbesondere bevorzugt ist.

Sulfonsäuren der Formel (I) (Komponente (a)), wie AMPS (la) und SEMA (Ib) sind aufgrund ihrer hohen Polarität wasserlöslich. Acrylate der Formel (II) (Komponente (b)) sind weitgehend wasserunlöslich, lösen sich jedoch in Alkohol. Initiatoren (Komponente (d)) sind je nach Polarität entweder in Wasser, in Alkoholen oder in Ethern löslich.

In einer bevorzugten Ausführungsform des Verfahrens (V1) werden zunächst vier getrennte Lösungen unter Verwendung der oben beschriebenen Lösungsmittel oder binärer oder ternärer Gemische daraus hergestellt, wobei Lösung 1 Komponente (a), Lösung 2 Komponente (b1), Lösung 3 Komponenten (b2) und Lösung 4 Komponente (d) enthält. Anschließend werden diese Lösungen einem Polymerisationsreaktor zugeführt und nach bekannten, dem Fachmann geläufigen Methoden polymerisiert. Im Polymerisationsreaktor kann dabei ein geeignetes Lösungsmittel oder ein binäres oder ternäres Lösungsmittelgemisch vorgelegt werden.

In einer weiteren Ausführungsform (V2) werden zunächst drei getrennte Lösungen unter Verwendung der oben beschriebenen Lösungsmittel oder binärer oder ternärer Gemische daraus hergestellt, wobei Lösung 1 Komponente (a), Lösung 2 Komponenten (b) und Lösung 3 Komponente (d) enthält. Diese Lösungen werden anschließend einem Polymerisationsreaktor zugeführt und in oben beschriebener Weise polymerisiert.

In einer weiteren Ausführungsform (V3) werden zunächst zwei getrennte Lösungen unter Verwendung der oben beschriebenen Lösungsmittel oder binärer oder ternärer Gemische daraus hergestellt, wobei Lösung 1 die Komponenten (a), (b) und gegebenenfalls (c) und Lösung 2 die Komponente (d) enthält. Anschließend werden diese Lösungen in oben beschriebener Weise dem Polymerisationsreaktor zugeführt und polymerisiert. In einer besonderen Ausführungsform wird hierbei Lösung 1 hergestellt, indem zwei Lösungen 1a (Komponente (a)) und 1b (Komponente (b)) vorsichtig miteinander vermischt werden.

In einer weiteren Ausführungsform (V4) werden die Komponenten (a), (b), gegebenenfalls (c) und (d) gemeinsam in einem geeigneten binären oder ternären Lösungsmittelgemisch der oben beschriebenen Lösungsmittel gelöst und nach bekannten, dem Fachmann geläufigen Methoden polymerisiert.

In einer bevorzugten Ausführungsform von (V3) werden zunächst zwei Lösungen hergestellt. Lösung 1 enthält dabei die Komponenten (a), (b) und gegebenenfalls (c) in einem Gemisch von Wasser mit Alkohol und/oder THF, wobei als Alkohol Isopropanol besonders bevorzugt ist. Lösung 2 enthält einen Initiator, vorzugsweise aus der Gruppe AlBN, 2,2'-Azo-bis(2-methylbutyronitril), 2,2'-Azo-bis(2,4-dimethyl valeronitril), 2,2'-Azo-bis(4-methoxy-2,4-dimethyl valeronitril), 2,2'-Azo-bis[2-(2-imidazolin-2-yl)propan]-dihydrochlorid und 2,2'-Azo-bis(2-methylpropionamidin)dihydrochlorid, wobei als Lösungsmittel für AIBN Tetrahydrofuran (THF) oder eine Mischung aus Tetrahydrofuran und Isopropanol und für 2,2'-Azo-bis(2-methylbutyronitril), 2,2'-Azo-bis(2,4-dimethyl valeronitril), 2,2'-Azo-bis(4-methoxy-2,4-dimethyl valeronitril) Isopropanol besonders bevorzugt sind. Für 2,2'-Azo-bis[2-(2-imidazolin-2-yl)propan]dihydrochlorid und 2,2'-Azo-bis(2-methylpropionamidin)dihydrochlorid ist Wasser oder eine Mischung von Wasser mit Isopropanol und/oder THF besonders bevorzugt.

Lösung 1 und Lösung 2 werden anschließend in einen Polymerisationsreaktor eingebracht, der Isopropanol und/oder THF oder Wasser oder eine Mischung aus Wasser mit Isopropanol und/oder THF enthält, und bei Temperaturen von 40 bis 90 °C polymerisiert.

In einer weiteren Ausführungsform (V5) werden die Komponenten (a), (b) und gegebenenfalls (c) in einem reinen Alkohol unter Erhitzen solange gemischt, bis eine klare Lösung oder Suspension entsteht und anschließend durch Zugabe der Komponente (d) polymerisiert. Unter reinen Alkoholen sind erfindungsgemäß solche Alkohole zu verstehen, die weniger als 1 Gew.-%, bevorzugt weniger als 0,7 Gew.-%, besonders bevorzugt weniger als 0,5 Gew.-%, insbesondere bevorzugt weniger als 0,3 Gew.-% und am meisten bevorzugt 0,1 Gew.-% an Verunreinigungen enthalten. Erhitzen bedeutet erfindungsgemäß, dass der Alkohol und die Komponenten (a), (b) und gegebenenfalls (c) auf Temperaturen im Bereich von oberhalb der Raumtemperatur (20 °C) bis zur Siedetemperatur bei Normaldruck erhitzt werden. Selbstverständlich ist bei Verwendung von Druckreaktoren auch ein Erhitzen des Alkohols über den Siedepunkt hinaus möglich.

Als reine Alkohole eignen sich prinzipiell alle Alkohole mit einem Siedepunkt kleiner 140 °C. Bevorzugte Alkohole sind Methanol, Ethanol, n-Propanol (1-Propanol) und iso-Propanol (2-Propanol). Insbesondere bevorzugt ist iso-Propanol (2-Propanol).

In einer weiteren Ausführungsform (V6) wird die Komponente (a) in Methanol oder Isopropanol oder Wasser oder Gemische derselben, die gegebenenfalls auch THF enthalten, vorgelegt und gelöst bzw. suspendiert. Nach der Bildung einer klaren Lösung oder Suspension durch Erhitzen werden die Komponenten (b), gegebenenfalls (c) und (d) gemeinsam oder getrennt zugegeben und die Mischung nach bekannten, dem Fachmann geläufigen Methoden polymerisiert.

Bevorzugt sind die Varianten V2, V3 und V6. Besonders bevorzugt sind die Varianten V2 und V3, insbesondere die Variante V3.

Die Polydispersität und das Molekulargewicht des statistischen radikalischen Copolymers lassen sich gewünschtenfalls durch die Variation des Initiator/Monomer-Verhältnisses, der Zulaufdauer der Substrate, insbesondere der Zulaufdauer der Initiatorlösung im Vergleich zur Zulaufdauer der Monomerlösung(en), durch die Variation des Alkohol-, insbesondere Isopropanolgehalts im Lösungsmittelgemisch und durch die Polymerisationskonzentration einstellen. Wählt man einen kurzen Initiatorzulauf und/oder einen hohen Isopropanolgehalt (Regler) im Lösungsmittelgemisch und/oder eine geringe Polymerisationskonzentration (hohes Regler/Monomer-Verhältnis), so erhält man in der Regel niedrigere Polydispersitäten.
Erfindungsgemäß wird eine möglichst enge Molekulargewichtsverteilung angestrebt, da Copolymere mit höheren Molmassen in der Regel schlechter wasserlöslich sind, wodurch die agrochemischen Wirkstoffzusammensetzungen manchmal eine verminderte Stabilität aufweisen.

Durch den Einsatz zusätzlicher Regler aus der Gruppe der Mecaptane, wie Mercaptoethanol, Thioglycerin oder 1-Dodecylmercaptan, lässt sich gewünschtenfalls die Polydispersität des Copolymers weiter verringern.

Die Molmassen M_{w} und Mₙ sowie die Polydispersität werden durch Größenausschlusschromatographie bestimmt. Als Kalibrationsmittel können handelsübliche Polystyrol- oder Poly(ethylenoxid)-Eichsätze verwendet werden.

Durch Veränderungen der Monomerzusammensetzung kann die Wasserlöslichkeit des Polymers eingestellt werden. Insbesondere eine Erhöhung des Anteils der hydrophilen Sulfonsäure der Formel (I) (Komponente (a)), wie AMPS (la) oder SEMA (Ib), führt zu einer Verbesserung der Wasserlöslichkeit und des Dispergiervermögens des synthetisierten Copolymers. Wasserlöslichkeit und Dispergiervermögen des synthetisierten Copolymers können ebenfalls durch die Wahl zweier verschiedener hydrophober Monomere b2' und b2" an die jeweiligen Anforderungen angepasst werden.

Bei der Herstellung der erfindungsgemäßen Copolymere kann teilweise durch partielle Hydrolyse von AMPS die Bildung von 2-Amino-2-methylpropansulfonsäure beobachtet werden. Dies kann zu einer Trübung der Reaktionsansätze führen. Dieses Nebenprodukt fällt als Zwitterion an und kann durch übliche präparative Methoden, wie Ausfällung oder Filtration von dem Copolymer abgetrennt werden. Die Bildung der 2-Amino-2-methylpropansulfonsäure kann sowohl aus dem Monomer als auch aus dem Copolymer bei erhöhter Temperatur und der Anwesenheit polarer, protischer Lösungsmittel, wie Wasser oder Alkohole, erfolgen. Durch gezielte Hydrolyse des einpolymerisierten AMPS ist es daher möglich, den Anteil an AMPS-Monomerwiederholungseinheiten und den Anteil an Acrylsäure-Monomerwiederholungseinheiten im Copolymer zu steuern. Natürlich ist es auch möglich, durch gezielte Hydrolyse oder Veresterung den Anteil an Acrylsäure- und Acrylsäureester-Monomer-Wiederholungseinheiten im Copolymer einzustellen. Dadurch bietet sich die Möglichkeit, die Wasserlöslichkeit oder das Dispergiervermögen des Copolymers zu kontrollieren.

Gewünschtenfalls kann das Copolymer isoliert und aufgearbeitet werden. Die Aufarbeitung erfolgt in bekannter, dem Fachmann geläufiger Weise, zum Beispiel durch einen vorgelagerten Filtrationsschritt. Hierdurch kann gegebenenfalls das Nebenprodukt 2-Amino-2-methylpropansulfonsäure entfernt werden. Gewünschtenfalls kann anschließend das Lösungsmittel entfernt werden. Übliche Verfahren zur Entfernung der Lösungsmittel sind beispielsweise Sprühtrocknung, Verdampfung bei erniedrigtem Druck, Gefriertrocknung und Verdampfen unter Atmosphärendruck bei gegebenenfalls erhöhter Temperatur. Zu den für die Trocknung geeigneten Verfahren gehört weiterhin die Trocknung in einem Fließbetttrockner. Es ist auch möglich, die nach dem Verfahren erhältliche Lösung des Copolymers ohne Aufarbeitung weiter zu verwenden.

Die Erfindung umfasst auch die nachfolgenden statistischen radikalischen Copolymere, welche nach dem erfindungsgemäßen Verfahren erhältlich sind.

Gegenstand der Erfindung ist daher ein statistisches radikalisches Copolymer, erhältlich durch Polymerisation, insbesondere nach dem erfindungsgemäßen Verfahren, von
a) mindestens einer olefinisch ungesättigten Sulfonsäure der Formel (I), 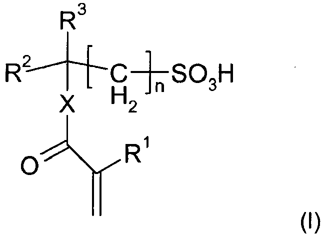 wobei
   - X: NH oder Sauerstoff;
   - R¹: Methyl oder Wasserstoff;
   - R² und R³: Methyl oder Wasserstoff und
   - n: 1
   bedeuten,
b1) mindestens einem olefinisch ungesättigten Monomer der Formel (IIa), 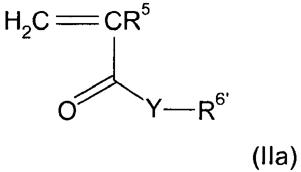 wobei
   - Y: Sauerstoff oder NR⁷;
   - R⁵: Wasserstoff oder Methyl;
   - R^{6'}: C₁-C₆-Alkyl, wie Methyl, Ethyl, Propyl, 1-Methylethyl, Butyl, 1-Methylpropyl, 2-Methylpropyl, 1,1-Dimethylethyl, Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2 Dimethylbutyl, 2,3-Dimethylbutyl, 3,3-Dimethylbutyl, 1-Ethylbutyl, 1,1,2-Trimethylpropyl, 1,2,2-Trimethylpropyl, 1-Ethyl-1-Methylpropyl, 1-Ethyl-2-Methylpropyl und Cyclohexyl, und
   - R⁷: Wasserstoff, Alkyl, Aryl, Alkylaryl, Arylalkyl, Alkoxyalkyl, Aryloxyalkyl, Alkoxyaryl, Hydroxyalkyl, (Di)Alkylaminoalkyl, (Di)Alkylaminoaryl, (Di)Arylaminoalkyl, Alkylarylaminoalkyl oder Alkylarylaminoaryl, wobei die Arylreste einfach oder mehrfach substituiert sein können,
   bedeuten,
b2) mindestens einem olefinisch ungesättigten Monomer der Formel (IIb), 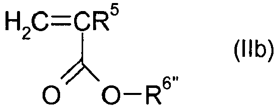 wobei
   - R⁵: Methyl oder Wasserstoff und
   - R^{6"}: C₇-C₂₀-Alkyl, wie n-Heptyl, n-Octyl, 2-Ethylhexyl, Decyl, Isodecyl, Undecyl, Dodecyl, Tridecyl, Tetradecyl, Pentadecyl, Hexadecyl, Heptadecyl, Octadecyl, Nonadecyl und Eicosyl,
   bedeuten und
c) gegebenenfalls mindestens einem weiteren, strukturell von den Komponenten (a) und (b) verschiedenen olefinisch ungesättigten Monomer.

Die erfindungsgemäßen, insbesondere erfindungsgemäß erhältlichen Copolymere weisen im Allgemeinen ein mittleres Molgewicht M_{W} im Bereich von 2500 bis 100 000, bevorzugt 5000 bis 50 000, besonders bevorzugt 5000 bis 30 000 auf. Das mittlere Molgewicht M_{N} liegt im Allgemeinen im Bereich von 1000 bis 50 000, bevorzugt 2000 bis 15 000.
Der Anteil an freien Säuregruppen (bezogen auf die Gesamtanzahl an Säuregruppen der Komponenten (a) und (c)) beträgt vorzugsweise mindestens 50 %, besonders bevorzugt mindestens 70 %, besonders bevorzugt 100 %.

Bevorzugte Copolymere sind weiterhin die durch Einsatz der oben angegebenen bevorzugten Monomerkomponenten erhältlichen.

Bevorzugte Copolymere sind solche mit einem mittleren Molgewicht M_{W} im Bereich von 2500 bis 100 000, bevorzugt 5000 bis 50 000, besonders bevorzugt 5000 bis 30 000 und einem Anteil an freien Säuregruppen (bezogen auf die Gesamtanzahl an Säuregruppen in den Komponenten (a) und (c)) von mindestens 50 %, bevorzugt 70 %, besonders bevorzugt 100 %. Insbesondere sind diese Copolymere aus den bevorzugten, besonders bevorzugten und ganz besonders bevorzugten oben angegebenen Monomerkomponenten erhältlich.

Bevorzugt, besonders bevorzugt und insbesondere bevorzugt als olefinisch ungesättigte Sulfonsäure (Komponente a)) sind 2-Acrylamido-2-methylpropansulfonsäure (AMPS) und 2-Sulfoethylmethylacrylat (SEMA).

Bevorzugt als olefinisch ungesättigtes Monomer der Formel (IIa) (Komponente b1)) sind Verbindungen der Formel (IIa),
worin
- Y: Sauerstoff oder NR⁷;
- R⁵: Wasserstoff oder Methyl;
- R⁶: (C₁-C₄)-Alkyl und
- R⁷: Wasserstoff oder (C₁-C₆)-Alkyl
bedeuten.

Besonders bevorzugt sind Verbindungen der Formel (IIa),
worin
- Y: Sauerstoff;
- R⁵: Wasserstoff oder Methyl und
- R⁶: (C₁-C₄)-Alkyl
bedeuten.

Insbesondere bevorzugt sind Verbindungen der Formel (IIa),
worin
- Y: Sauerstoff;
- R⁵: Methyl und
- R⁶: (C₁-C₄)-Alkyl
bedeuten.

Bevorzugt als olefinisch ungesättigtes Monomer der Formel (IIb) (Komponente (b2)) sind Verbindungen der Formel (IIb),
worin
- Y: Sauerstoff;
- R⁵: Wasserstoff oder Methyl und
- R⁶: (C₁₀-C₂₀)-Alkyl
bedeuten.

Besonders bevorzugt sind Verbindungen der Formel (IIb),
worin
- Y: Sauerstoff;
- R⁵: Wasserstoff oder Methyl und
- R⁶: Decyl, Dodecyl, Tetradecyl, Hexadecyl, Octadecyl oder Eicosyl
bedeuten.

Insbesondere bevorzugt sind Verbindungen der Formel (IIb),
worin
- Y: Sauerstoff;
- R⁵: Wasserstoff und
- R⁶: Dodecyl, Tetradecyl, Hexadecyl oder Octadecyl
bedeuten.

Bevorzugt, besonders bevorzugt und insbesondere bevorzugt als Verbindungen der Komponente (c) sind Acrylsäure und Methacrylsäure.

Zur Polymerisation des erfindungsgemäßen Copolymers werden vorzugsweise keine weiteren Monomere aus der Gruppe α-Olefine (wie Ethen, Propen, 1-Buten, 1-Penten, 1-Hexen, Isobuten), langkettige (C₁₀-C₂₀)Alkyl-α-Olefine, Diene (wie Butadien und Isopren), Vinylhalogenide (wie Vinylchlorid, Vinylbromid, Vinylfluorid, Vinylidenchlorid, Vinylidenfluorid, Vinylidenbromid), Vinylnitril, Vinylcarboxylate, ungesättigte Aldehyde (wie Acrolein) eingesetzt.

Zur Polymerisation des erfindungsgemäßen Copolymers werden in einer Ausführungsform bevorzugt vinylaromatische Monomere (c) (wie Styrol und Styrolderivate, z. B. α-Methylstyrol, Vinyltoluol, ortho-, meta- und para-Methylstyrol, Ethylvinylbenzol, Vinylnaphthalin, Vinylxylol sowie die entsprechenden halogenierten vinylaromatischen Monomere), Vinylsulfonsäure, 1-Vinylamide (wie 1-Vinylpyrrolidon, 1-Vinylpiperidon, 1-Vinylcaprolactam, 1-Vinylformamid, 1-Vinylacetamid oder 1-Methyl-1-vinylacetamid, n-Vinylimidazol), Anydride (wie Maleinsäureanhydrid), Vinylalkoholester (wie Vinylacetat) eingesetzt.

Zur Polymerisation werden insbesondere bevorzugt neben Acrylsäure und/oder Methacrylsäure keine weiteren olefinisch ungesättigten Monomere (c) eingesetzt.

Bevorzugt ist ein erfindungsgemäßes Copolymer, erhältlich durch Polymerisation von mindestens zwei Monomeren der Formel (IIb). Bevorzugt, besonders bevorzugt und insbesondere bevorzugt in dieser Ausführungsform haben dabei die Komponenten (a), (b1), (b2) und (c) die bevorzugten, besonders bevorzugten bzw. insbesondere bevorzugten Bedeutungen.

Bevorzugt ist weiterhin ein erfindungsgemäßes Copolymer, welches durch Polymerisation von jeweils einem Monomer der Komponenten (a), (b1) und (b2) und gegebenenfalls einem, vorzugsweise keinem weiteren Monomer der Komponente (c) erhältlich ist. Bevorzugt, besonders bevorzugt und insbesondere bevorzugt in dieser Ausführungsform haben dabei die Komponenten (a), (b1), (b2) und (c) die bevorzugten, besonders bevorzugten bzw. insbesondere bevorzugten Bedeutungen.

Ebenso bevorzugt ist ein erfindungsgemäßes Copolymer, welches durch Polymerisation von jeweils einem Monomer der Komponenten (a) und (b1), zwei Monomeren der Komponente (b2), insbesondere bevorzugt einem Monomer (b2), bei dem R^{6"} C₁₂-Alkyl bedeutet, und einem Monomer (b2), bei dem R^{6"} C₁₃-C₂₀-Alkyl bedeutet, und gegebenenfalls einem oder zwei Monomeren der Komponente (c) erhältlich ist. Bevorzugt, besonders bevorzugt und insbesondere bevorzugt in dieser Ausführungsform haben dabei die Komponenten (a), (b1), (b2) und (c) die bevorzugten, besonders bevorzugten bzw. insbesondere bevorzugten Bedeutungen.

In einer bevorzugten Ausführungsform enthalten die erfindungsgemäßen Copolymere die Komponente (a) in Mengenverhältnissen von 10 bis 80 Gew.-%, besonders bevorzugt von 25 bis 70 Gew.-%, insbesondere bevorzugt von 30 bis 65 Gew.-%, die Komponente (b1) in Mengenverhältnissen von 20 bis 90 Gew.-%, die Komponenten (b2) in Mengenverhältnissen von 2 bis 30 Gew.-% und die Komponente (c) in Mengenverhältnissen von 0 bis 50 Gew.-%, jeweils bezogen auf das Gesamtgewicht des Copolymers.

In einer besonders bevorzugten Ausführungsform enthalten die erfindungsgemäßen Copolymere die Komponente (a) in Mengenverhältnissen von 20 bis 60 Gew.-%, die Komponente (b1) in Mengenverhältnissen von 30 bis 80 Gew.-%, die Komponenten (b2) in Mengenverhältnissen von 5 bis 25 Gew.-% und die Komponente (c) in Mengenverhältnissen von 0 bis 40, vorzugsweise 0 bis 20 Gew.-%, jeweils bezogen auf das Gesamtgewicht des Copolymers.

Bevorzugt beträgt die Menge der Monomere (a) und (c) mit einer Säuregruppe 10 bis 60 Gew.-%, insbesondere 20 bis 60 Gew.-%.

In einer bevorzugten Ausführungsform enthalten die erfindungsgemäßen Copolymere als Komponente zwei Monomere der Komponente (b2), wobei R^{6"} einmal C₇-C₁₂-Alkyl und einmal C₁₃-C₂₀-Alkyl bedeutet. Bevorzugt, besonders bevorzugt und insbesondere bevorzugt in dieser Ausführungsform haben dabei die Komponenten (a), (b1), (b2) und (c) die bevorzugten, besonders bevorzugten bzw. insbesondere bevorzugten Bedeutungen.

Die erfindungsgemäßen sowie erfindungsgemäß erhältlichen Copolymere eignen sich zur Verwendung in agrochemischen Wirkstoffzusammensetzungen.

Als agrochemische Wirkstoffe (im Folgenden kurz "Wirkstoffe") werden erfindungsgemäß Fungizide, Insektizide (wobei dieser Begriff erfindungsgemäß neben Insektiziden im engeren Sinne auch Akarizide, Nematizide und Molluskizide umfasst), Herbizide (umfassend Wachstumsregulatoren) und Bakterizide (soweit im Pflanzenschutz eingesetzt) bezeichnet.

Die Herstellung von erfindungsgemäßen agrochemischen Wirkstoffzusammensetzungen kann in an sich bekannter Weise erfolgen und hängt in an sich bekannter Weise von der Art der Zusammensetzung ab. Verfahren hierzu sind bekannt, beispielsweise aus US 3,060,084, EP-A 707445, Browning, "Agglomeration", Chemical Engineering, Dec. 4, 1967, 147-148, Perry's Chemical Engineer's Handbook, 4th ed., McGraw-Hill, New York, 1963, S. 8-57, WO 91/13546, US 4,172,714, US 4,144,050, US 3,920,442, US 5,180,587, US 5,232,701, US 5,208,030, GB 2,095,558, US 3,299,566, Klingman, "Weed Controll as a Science", John Wiley and Sons, New York 1961, Hance et al. Weed Control Handbook, 8th ed. Blackwell Scientific Publications, Oxford 1989, H. Mollet et al., "Formulation Technology", Wiley VCH-Verlag, Weinheim, 2001, sowie durch die in WO 2005/121201 und WO 2006/084680 beschriebenen Verfahren.

Der Begriff "agrochemische Wirkstoffzusammensetzung" umfasst erfindungsgemäß sowohl Formulierungen, d.h. Zusammensetzungen, die den Wirkstoff in konzentrierter Form enthalten, als auch wässrige anwendungsfertige Zusammensetzungen (Applikationsformen, insbesondere wässrige Dispersionen), die den Wirkstoff in verdünnter Form enthalten.

Gegenstand der Erfindung ist auch ein Verfahren zur Herstellung einer agrochemischen Wirkstoffzusammensetzung. Bevorzugt werden dazu ein oder mehrere erfindungsgemäße Copolymere und mindestens ein Pflanzenschutzwirkstoff sowie gegebenenfalls weitere Zusatzstoffe getrennt voneinander in gleichen oder verschiedenen, bevorzugt miteinander mischbaren Lösungsmitteln gelöst und die so erhaltenen Lösungen gegebenenfalls unter Zugabe weiterer Zusatzstoffe miteinander gemischt. In einem zweiten Schritt kann das Lösungsmittel nach einer der oben beschriebenen Methoden entfernt werden. Eine Entfernung der Lösungsmittel ist jedoch nicht zwingend erforderlich.

In einer weiteren Ausführungsform des erfindungsgemäßen Verfahrens wird eine gemeinsame Lösung des Copolymers und mindestens eines Wirkstoffs sowie optional weiterer Zusatzstoffe hergestellt, indem man eine der Komponenten in einem Lösungsmittel gelöst vorlegt und die weiteren Komponenten hinzufügt und löst. Das Entfernen des Lösungsmittels kann in einem nachgelagerten Schritt nach den oben beschriebenen Methoden erfolgen.

Dazu bringt man beispielsweise das Copolymer in wässrige Lösung, löst mindestens einen Wirkstoff in einem oder mehreren organischen Lösungsmitteln, das oder die mit Wasser mischbar sind, und mischt die Lösungen miteinander. Optional können weitere Zusatzstoffe hinzugefügt werden, und man kann durch Einbringen von Scherkräften die Wirkstoffzusammensetzung in dispergierter Form erhalten. Anschließend werden die Lösungsmittel in üblicher Weise entfernt.

Mischbar mit Wasser bedeutet in diesem Zusammenhang, dass die organischen Lösungsmittel ohne Phasenseparation zu mindestens 10 Gew.-%, bevorzugt zu 15 Gew.-%, besonders bevorzugt zu 20 Gew.-% mit Wasser mischbar sind.

Für den Erhalt feiner Partikel kann beim Mischen der wässrigen und organischen Phase ein Energieeintrag vorteilhaft sein, beispielsweise unter Anwendung von Scherkräften durch hochfrequentes und hochamplitudiges Schütteln, hochfrequentes Rühren, Turbinieren oder durch Verwendung einer Mischkammer. Das Mischen kann in kontinuierlicher oder diskontinuierlicher Weise erfolgen. Bevorzugt ist kontinuierliches Mischen. Die auf diese Art erhaltene Dispersion kann in üblicher Weise wie oben ausgeführt von den Lösungsmitteln befreit werden.

Geeignete Lösungsmittel zur Herstellung der Wirkstoffzusammensetzung sind beispielsweise Mischungen von Alkylaromaten, besonders Alkylbenzole und Alkylnaphthalene, die Alkylgruppen mit 1 bis 20 Kohlenstoffatomen tragen. Solche Mischungen sind kommerziell erhältlich, z. B. Solvesso^{®}, wie Solvesso 200 (Exxon Mobil, USA), Aromaten, z. B. Aromatic 200 (Exxon Mobil), oder Shellsol^{®} Produkte (Deutsche Shell Chemie GmbH, Germany). Andere geeignete organische Lösungsmittel sind Paraffine, Alkohole, Pyrrolidone, Acetate, Glycole, Fettsäuren, Dimethylamide, Fettsäure-Dimethylamide, Fettsäure-Ester, Pflanzenöle wie Kokosöl, Palmkernöl, Palmöl, Sojaöl, Rapsöl, Maisöl und die Methyl- oder Ethylester der vorstehend genannten Öle sowie Mischungen davon. Weitere geeignete Lösungsmittel sind Tributylphosphat, Methanol, Ethanol, Isopropanol, 1-Butanol, 2-Butanol, tert-Butanol, Pentanol, Hexanol, 2-Ethylhexanol, 1,3-Dimethyl-2-imidazolinon, 2-Methyl-2,4-pentanediol, Aceton, Acetophenon, Propansäure, 2-Hydroxy-2-ethylhexylester, Di-n-octylcarbonat, Ethylencarbonat, Propylencarbonat, Butylencarbonat, dibasische Ester wie Adipinsäuredimethylester, Bernsteinsäuredimethylester, Glutarsäuredimethylester und deren Mischungen oder Diisobutylderivate von Benzylacetat, Benzylalkohol, Benzylbenzoat, Cyclohexan, Cyclohexanol, Cyclohexanon, Butyllactat, 2-Ethylhexyllactat, Ethyllactat, Methyllactat, n-Propyllactat, Tetrahydrofurfurylalkohol, Xylol, Diethylenglykol, Dimethylformamid, Dimethylsulfoxid, Dipropylenglykol, 5-Methyl-3-heptanon, Glykole und Derivate wie z.B. Polyethylenglykol, Glycerin, Propylenglykol, Propylenglykolmonomethyl-etheracetat, Dipropylenglykolmonomethylether, Propylenglykolmonophenylether; Butyrolacton, Glycerin, Methylbenzoat, n-Ethyl-2-pyrrolidon, n-Methylcaprolactam, n-Octyl-2-pyrrolidon, Propansäure, sowie Ether, wie Tetrahydrofuran und Dioxan, Wasser, sowie Mischungen dieser Lösungsmittel, Ester, Ketone wie Aceton, Methylethylketon, Methylisopropylketon, Methylisobutylketon, Acetale, Ether, cyclische Ether wie Tetrahydrofuran, aliphatische Carbonsäuren wie Ameisensäure, Essigsäure, Propionsäure, Carbonsäureester, beispielsweise Essigester und Lactone wie Butyrolacton, aliphatische und aromatische Chlorkohlenwasserstoffe wie Methylenchlorid, Chloroform, 1,2-Dichlorethan oder Chlorbenzol, sowie Mischungen der genannten Lösungsmittel.

Geeignete Feststoffgehalte der Lösungen liegen im Konzentrationsbereich von 0,1 bis 60 Gewichtsprozent (Gew.-%), bevorzugt zwischen 0,5 und 50 Gew.-%, besonders bevorzugt zwischen 0,4 und 40 Gew.-%. Geeignete Wirkstoffgehalte liegen im Konzentrationsbereich von 0,01 bis 60 Gew.-%, bevorzugt zwischen 0,1 und 50 Gew.-%, besonders bevorzugt zwischen 0,1 und 40 Gew.-%.

In einer bevorzugten Ausführungsform werden mindestens ein Wirkstoff sowie optional weitere Zusatzstoffe zu dem Copolymer gemeinsam oder getrennt voneinander vor Entfernung des zur Polymerisationsreaktion verwendeten Lösungsmittels oder Lösungsmittelgemischs zugegeben. Das heißt, die Zugabe des mindestens einen Wirkstoffs sowie optional weiterer Zusatzstoffe kann vor, während oder nach Beendigung der Polymerisationsreaktion erfolgen. In einer besonders bevorzugten Ausführungsform erfolgt die Zugabe des Wirkstoffs nach beendeter Polymerisationsreaktion. Die Zugabe des mindestens einen Wirkstoffs sowie optional weiterer Zusatzstoffe kann dabei zeitgleich, zeitlich vorgelagert oder zeitlich nachgelagert erfolgen.

In einer weiteren bevorzugten Ausführungsform werden mindestens ein Wirkstoff sowie optional weitere Zusatzstoffe nach Beendigung der Polymerisation zur Reaktionsmischung des Copolymers und der verwendeten Lösungsmittel bzw. Lösungsmittelgemische zugegeben und nach bekannten, dem Fachmann geläufigen Methoden gelöst oder dispergiert. In einer insbesondere bevorzugten Ausführungsform ist der mindestens eine Wirkstoff in dem zur Polymerisation verwendeten Lösungsmittel oder Lösungsmittelgemisch löslich. Das Entfernen des Lösungsmittels erfolgt in einem nachgelagerten Schritt nach den oben beschriebenen Methoden.

Gegenstand der Erfindung ist auch eine agrochemische Wirkstoffzusammensetzung, enthaltend
(A) mindestens ein erfindungsgemäßes statistisches radikalisches Copolymer und
(B) mindestens einen agrochemischen Wirkstoff.

Bevorzugt, besonders bevorzugt und insbesondere bevorzugt als Komponente (A) sind die oben genannten bevorzugten, besonders bevorzugten bzw. insbesondere bevorzugten Copolymere, insbesondere deren Ausführungsformen mit einem oder zwei Monomeren als Komponente (b2).

Bevorzugt, besonders bevorzugt und insbesondere bevorzugt sind die Kombinationen der bevorzugten, besonders bevorzugten und insbesondere bevorzugten Copolymere mit den jeweils unten aufgeführten bevorzugten, besonders bevorzugten bzw. insbesondere bevorzugten Wirkstoffen.

Geeignete Wirkstoffgehalte liegen im Konzentrationsbereich von 0,001 bis 90 Gew.-%, bevorzugt zwischen 0,01 und 80 Gew.-%, besonders bevorzugt zwischen 0,1 und 70 Gew.-% (jeweils bezogen auf die gesamte Zusammensetzung).

Erfindungsgemäß wird die Menge des mindestens einen Copolymers so gewählt, dass das Verhältnis der Gewichtsanteile von Wirkstoff(en) zu Copolymer(en) im Bereich von 1:10 bis 10:1, bevorzugt im Bereich von 1:4 bis 4:1, besonders bevorzugt im Bereich von 1:3 bis 2:1 liegt.

Bevorzugt sind schwer wasserlösliche Wirkstoffe. Schwer wasserlöslich bedeutet im Rahmen der Erfindung eine Wasserlöslichkeit von weniger als 1000 mg/l, bevorzugt weniger als 100 mg/l, jeweils bei einer Temperatur von 20 °C.

Geeignete Pflanzenschutzwirkstoffe sind beispielsweise Fungizide, Insektizide und Herbizide, die unter http://www.hclrss.demon.co.uk/index_cn_frame.html (Index of common names) aufgeführt sind. Als bevorzugt seien die folgenden Fungizide, Herbizide und Insektizide genannt:
Bevorzugte Fungizide umfassen
   - Strobilurine,
      z. B. Azoxystrobin, Dimoxystrobin, Enestroburin, Fluoxastrobin, Kresoximmethyl, Metominostrobin, Picoxystrobin, Pyraclostrobin, Trifloxystrobin, Orysastrobin, (2-Chlor-5-[1-(3-methyl-benzyloxyimino)-ethyl]-benzyl)-carbaminsäuremethylester, (2-Chlor-5-[1-(6-methyl-pyridin-2-ylmethoxyimino)-ethyl]-benzyl)-carbaminsäuremethylester, 2-(ortho-(2,5-Dimethylphenyloxymethylen)phenyl)-3-methoxy-acrylsäuremethylester;
      Carbonsäureamide
   - Carbonsäureanilide, wie Benalaxyl, Benodanil, Bixafen, Fluopyram, Isopyrazam, Sedaxane, Boscalid, Carboxin, Mepronil, Fenfuram, Fenhexamid, Flutolanil, Furametpyr, Metalaxyl, Ofurace, Oxadixyl, Oxycarboxin, Penthiopyrad, Thifluzamide, Tiadinil, 4-Difluormethyl-2-methyl-thiazol-5-carbonsäure-(4'-brombiphenyl-2-yl)-amid, 4-Difluormethyl-2-methyl-thiazol-5-carbonsäure-(4'-trifluormethyl-biphenyl-2-yl)-amid, 4-Difluormethyl-2-methyl-thiazol-5-carbonsäure-(4'-chlor-3'-fluor-biphenyl-2-yl)-amid, 3-Difluormethyl-1-methyl-pyrazol-4-carbonsäure-(3',4'-dichlor-4-fluor-biphenyl-2-yl)-amid, 3-Difluormethyl-1-methylpyrazol-4-carbonsäure-(3',4'-di-chlor-5-fluor-biphenyl-2-yl)-amid, 3,4-Dichlorisothiazol-5-carbonsäure-(2-cyano-phenyl)-amid, N-(3',4',5'-Trifluorbiphenyl-2-yl)-3-difluormethyl-1-methyl-1H-pyrazol-4-carboxamid, N-[2-(4'-trifluormethylthio)biphenyl]-3-difluormethyl-1-methyl-1H-pyrazol-4-carboxamid, N-[2-(1,3-dimethylbutyl)phenyl]-1,3-dimethyl-5-fluor-1H-pyrazol-4-carboxamid, N-(2-bicyclopropyl-2-yl-phenyl)-3-difluormethyl-1-methyl-1H-pyrazol-4-carboxamid, N-(cis-2-bicyclopropyl-2-yl-phenyl)-3-difluormethyl-1-methyl-1H-pyrazol-4-carboxamid, N-(trans-2-bicyclopropyl-2-yl-phenyl)-3-difluormethyl-1-methyl-1H-pyrazol-4-carboxamid, N-[1,2,3,4-Tetrahydro-9-(1-methylethyl)-1,4-methanonaphthalin-5-yl]-3-difluormethyl-1-methyl-1H-pyrazol-4-carboxamid;
   - Carbonsäuremorpholide, wie Dimethomorph, Flumorph;
   - Benzoesäureamide, wie Flumetover, Fluopicolide (Picobenzamid), Zoxamide;
   - sonstige Carbonsäureamide, wie Carpropamid, Diclocymet, Mandipropamid, Ethaboxam, N-(2-(4-[3-(4-Chlor-phenyl)-prop-2-inyloxy]-3-methoxy-phenyl)-ethyl)-2-methansulfonylamino-3-methyl-butyramid, N-(2-(4-[3-(4-Chlor-phenyl)-prop-2-inyloxy]-3-methoxy-phenyl)-ethyl)-2-ethansulfonylamino-3-methyl-butyramid;
      Azole (DMI)
   - Triazole, wie Bitertanol, Bromuconazole, Cyproconazole, Difenoconazole, Diniconazole, Enilconazole, Epoxiconazole, Fenbuconazole, Flusilazole, Fluquinconazole, Flutriafol, Hexaconazol, Imibenconazole, Ipconazole, Metconazol, Myclobutanil, Penconazole, Propiconazole, Prothioconazole, Simeconazole, Tebuconazole, Tetraconazole, Triadimenol, Triadimefon, Triticonazole;
   - Imidazole, wie Cyazofamid, Imazalil, Pefurazoate, Prochloraz, Triflumizole;
   - Benzimidazole, wie Benomyl, Carbendazim, Fuberidazole, Thiabendazole; und sonstige, wie Etridiazole, Hymexazole;
      Stickstoffhaltige Heterocyclylverbindungen, z. B.
   - Pyridine, wie Fluazinam, Pyrifenox, 3-[5-(4-Chlor-phenyl)-2,3-dimethyl-isoxazolidin-3-yl]-pyridin;
   - Pyrimidine, wie Bupirimate, Cyprodinil, Ferimzone, Fenarimol, Mepanipyrim, Nuarimol, Pyrimethanil;
   - Piperazine, wie Triforine;
   - Pyrrole, wie Fludioxonil, Fenpiclonil;
   - Morpholine, wie Aldimorph, Dodemorph, Fenpropimorph, Tridemorph;
   - Dicarboximide, wie Iprodione, Procymidone, Vinclozolin;
   - sonstige, wie Acibenzolar-S-methyl, Anilazin, Captan, Captafol, Dazomet, Diclomezine, Fenoxanil, Folpet, Fenpropidin, Famoxadone, Fenamidone, Octhilinone, Probenazole, Proquinazid, Pyroquilon, Quinoxyfen, Tricyclazole, 6-Aryl-[1,2,4]triazolo[1,5-a]pyrimidinen, z. B. 5-Chlor-7-(4-methyl-piperidin-1-yl)-6-(2,4,6-trifluor-phenyl)-[1,2,4]triazolo[1,5-a]pyrimidin, 2-Butoxy-6-iodo-3-propylchromen-4-on, 3-(3-Brom-6-fluoro-2-methyl-indol-1-sulfonyl)-[1,2,4]triazol-1-sulfonsäuredimethylamid;
      Carbamate und Dithiocarbamate
   - Dithiocarbamate, wie Ferbam, Mancozeb, Maneb, Metiram, Metam, Propineb, Thiram, Zineb, Ziram;
   - Carbamate, wie Diethofencarb, Flubenthiavalicarb, Iprovalicarb, Propamocarb, 3-(4-Chlor-phenyl)-3-(2-isopropoxycarbonylamino-3-methyl-butyrylamino)-propionsäuremethylester, N-(1 -(1 -(4-cyanophenyl)ethansulfonyl)-but-2-yl) carbaminsäure-(4-fluorphenyl)ester;
      Sonstige Fungizide
   - Guanidine, wie Dodine, Iminoctadine, Guazatine;
   - Antibiotika, wie Kasugamycin, Polyoxine, Streptomycin, Validamycin A;
   - Organometallverbindungen, wie Fentinsalze;
   - Schwefelhaltige Heterocyclylverbindungen, wie Isoprothiolane, Dithianon;
   - Organophosphorverbindungen, wie Edifenphos, Fosetyl, Fosetylaluminium, Iprobenfos, Pyrazophos, Tolclofos-methyl, Phosphorige Säure und ihre Salze;
   - Organochlorverbindungen, wie Thiophanat Methyl, Chlorothalonil, Dichlofluanid, Tolylfluanid, Flusulfamide, Phthalide, Hexachlorbenzol, Pencycuron, Quintozene;
   - Nitrophenylderivate, wie Binapacryl, Dinocap, Dinobuton;
   - weitere, wie Spiroxamine, Cyflufenamid, Cymoxanil, Metrafenon.
Bevorzugte herbizide Wirkstoffe umfassen:
   - 1,3,4-Thiadiazole wie Buthidazole und Cyprazole;
   - Amide wie Allidochlor, Benzoylpropethyl, Bromobutide, Chlorthiamid, Dimepiperate, Dimethenamid, Diphenamid, Etobenzanid, Flampropmethyl, Fosamin, Isoxaben, Metazachlor, Monalide, Naptalame, Pronamid, Propanil;
   - Aminophosphorsäuren wie Bilanafos, Buminafos, Glufosinateammonium, Glyphosate, Sulfosate;
   - Aminotriazole wie Amitrol, Anilide wie Anilofos, Mefenacet;
   - Anilide wie Anilofos, Mefenacet;
   - Aryloxyalkansäure wie 2,4-D, 2,4-DB, Clomeprop, Dichlorprop, Dichlorprop-P, Fenoprop, Fluroxypyr, MCPA, MCPB, Mecoprop, Mecoprop-P, Napropamide, Napropanilide, Triclopyr;
   - Benzoesäuren wie Chloramben, Dicamba;
   - Benzothiadiazinone wie Bentazon;
   - Bleacher wie Clomazone, Diflufenican, Fluorochloridone, Flupoxam, Fluridone, Pyrazolate, Sulcotrione;
   - Carbamate wie Carbetamid, Chlorbufam, Chlorpropham, Desmedipham, Phenmedipham, Vernolate;
   - Chinolinsäuren wie Quinclorac, Quinmerac;
   - Dichlorpropionsäuren wie Dalapon;
   - Dihydrobenzofurane wie Ethofumesate;
   - Dihydrofuran-3-on wie Flurtamone;
   - Dinitroaniline wie Benefin, Butralin, Dinitramin, Ethalfluralin, Fluchloralin, Isopropalin, Nitralin, Oryzalin, Pendimethalin, Prodiamine, Profluralin, Trifluralin,
   - Dinitrophenole wie Bromofenoxim, Dinoseb, Dinosebacetat, Dinoterb, DNOC, Minoterbacetat;
   - Diphenylether wie Acifluorfen-sodium, Aclonifen, Bifenox, Chlornitrofen, Difenoxuron, Ethoxyfen, Fluorodifen, Fluoroglycofen-ethyl, Fomesafen, Furyloxyfen, Lactofen, Nitrofen, Nitrofluorfen, Oxyfluorfen;
   - Dipyridyle wie Cyperquat, Difenzoquatmethylsulfat, Diquat, Paraquatdichlorid;
   - Imidazole wie Isocarbamid;
   - Imidazolinone wie Imazamethapyr, Imazapyr, Imazaquin, Imazethabenz-methyl, Imazethapyr, Imazapic, Imazamox;
   - Oxadiazole wie Methazole, Oxadiargyl, Oxadiazon;
   - Oxirane wie Tridiphane;
   - Phenole wie Bromoxynil, loxynil;
   - Phenoxyphenoxypropionsäureester wie Clodinafop, Cyhalofop-butyl, Diclofopmethyl, Fenoxaprop-ethyl, Fenoxaprop-p-ethyl, Fenthiapropethyl, Fluazifopbutyl, Fluazifop-p-butyl, Haloxyfop-ethoxy-ethyl, Haloxyfop-methyl, Haloxyfop-p-methyl, Isoxapyrifop, Propaquizafop, Quizalofop-ethyl, Quizalofop-p-ethyl, Quizalofop-tefuryl;
   - Phenylessigsäuren wie Chlorfenac;
   - Phenylpropionsäuren wie Chlorophenprop-methyl;
   - ppi-Wirkstoffe wie Benzofenap, Flumiclorac-pentyl, Flumioxazin, Flumipropyn, Flupropacil, Pyrazoxyfen, Sulfentrazone, Thidiazimin;
   - Pyrazole wie Nipyraclofen;
   - Pyridazine wie Chloridazon, Maleic hydrazide, Norflurazon, Pyridate;
   - Pyridincarbonsäuren wie Clopyralid, Dithiopyr, Picloram, Thiazopyr;
   - Pyrimidylether wie Pyrithiobacsäure, Pyrithiobac-sodium, KIH-2023, KIH-6127;
   - Sulfonamide wie Flumetsulam, Metosulam;
   - Triazolcarboxamide wie Triazofenamid;
   - Uracile wie Bromacil, Lenacil, Terbacil;
   - ferner Benazolin, Benfuresate, Bensulide, Benzofluor, Bentazon, Butamifos, Cafenstrole, Chlorthal-dimethyl, Cinmethylin, Dichlobenil, Endothall, Fluorbentranil, Mefluidide, Perfluidone, Piperophos, Topramezone und Prohexadion-Calcium;
   - Sulfonylharnstoffe wie Amidosulfuron, Azimsulfuron, Bensulfuron-methyl, Chlorimuron-ethyl, Chlorsulfuron, Cinosulfuron, Cyclosulfamuron, Ethametsulfuron-methyl, Flazasulfuron, Halosulfuron-methyl, Imazosulfuron, Metsulfuronmethyl, Nicosulfuron, Primisulfuron, Prosulfuron, Pyrazosulfuron-ethyl, Rimsulfuron, Sulfometuron-methyl, Thifensulfuron-methyl, Triasulfuron, Tribenuronmethyl, Triflusulfuron-methyl, Tritosulfuron;
   - Herbizide vom Cyclohexenon-Typ wie Alloxydim, Clethodim, Cloproxydim, Cycloxydim, Sethoxydim und Tralkoxydim. Ganz besonders bevorzugte herbizide Wirkstoffe vom Cyclohexenon-Typ sind: Tepraloxydim (vgl. AGROW, Nr. 243, 3.11.95, Seite 21, Caloxydim) und 2-(1-[2-{4-Chlorphenoxy}propyloxyimino]butyl)-3-hydroxy-5-(2H-tetrahydrothiopyran-3-yl)-2-cyclohexen-1-on und vom Sulfonylharnstoff-Typ: N-(((4-methoxy-6-[trifluormethyl]-1,3,5-triazin-2-yl)amino)carbo-nyl)-2-(trifluormethyl)-benzolsulfonamid.
Bevorzugte Insektizide umfassen:
   - Organo(thio)phosphate wie Acephate, Azamethiphos, Azinphos-ethyl, Azinphos-methyl, Cadudsafos, Chlorethoxyphos, Chlorfenvinphos, Chlormephos, Chlorpyrifos, Chlorpyrifos-methyl, Chlorfenvinphos, Coumaphos, Cyanophos, Demeton-S-methyl, Diazinon, Dichlorvos/ DDVP, Dicrotophos, Dimethoate, Dimethylvinphos, Disulfoton, EPN, Ethion, Ethoprophos, Famphur, Fenamiphos, Fenitrothion, Fenthion, Fosthiazate, Heptenophos, Isoxathion, Malathion, Mecarbam, Methamidophos, Methidathion, Methyl-parathion, Mevinphos, Monocrotophos, Naled, Omethoate, Oxydemeton-methyl, Paraoxon, Parathion, Parathion-methyl, Phenthoat, Phorat, Phosalon, Phosmet, Phosphamidon, Phorate, Phoxim, Pirimiphos, Pirimiphos-methyl, Profenofos, Propetamphos, Prothiofos, Pyraclofos, Pyridaphenthion, Quinalphos, Sulfotep, Sulprophos, Tebupirimfos, Temephos, Terbufos, Tetrachlorvinphos, Thiometon, Triazophos, Trichlorfon, Vamidothion;
   - Carbamate wie Alanycarb, Aldicarb, Bendiocarb, Benfuracarb, Butocarboxim, Butoxycarboxim, Carbaryl, Carbofuran, Carbosulfan, Ethiofoncarb, Fenobucarb, Fenoxycarb, Formethanat, Furathiocarb, Isoprocarb, Methiocarb, Methomyl, Metolcarb, Oxamyl, Pirimicarb, Propoxur, Thiodicarb, Thiofanox, Triazemate, Trimethacarb, XMC, Xylylcarb;
   - Pyrethroide, wie Acrinathrin, Allethrin, d-cis-trans Allethrin, d-trans Allethrin, Bifenthrin, Bioallethrin, Bioallethrin S-cyclopentenyl, Bioresmethrin, Cycloprothrin, Cyfluthrin, beta-Cyfluthrin, Cyhalothrin, lambda-Cyhalothrin, gamma-Cyhalothrin, Cyphenothrin, Cypermethrin, alpha-Cypermethrin, beta-Cypermethrin, theta-Cypermethrin, zeta-Cypermethrin, Deltamethrin, Empenthrin, Esfenvalerat, Etofenprox, Fenpropathrin, Fenvalerat, Flucythrinat, Flumethrin, tau-Fluvalinate, Halfenprox, Imiprothrin, Permethrin, Phenothrin, Prallethrin, Profluthrin, Pyrethrin I and II, Resmethrin, RU 15525, Silafluofen, tau-Fluvalinate, Tefluthrin, Tetramethrin, Tralomethrin, Transfluthrin, Dimefluthrin, ZXI 8901;
   - Arthropode Wachstumsregulatoren: a) Chitinsyntheseinhibitoren z. B. Benzoylharnstoffe wie Bistrifluron, Chlorfluazuron, Diflubenzuron, Flucycloxuron, Flufenoxuron, Hexaflumuron, Lufenuron, Novaluron, Noviflumuron, Teflubenzuron, Triflumuron, Buprofezin, Diofenolan, Hexythiazox, Etoxazole, Clofentezine; b) Ecdysone antagonisten, wie Chlormafenozide, Halofenozide, Methoxyfenozide, Tebufenozide, Azadirachtin; c) Juvenoide wie Pyriproxyfen, Hydroprene, Kinoprene, Methoprene, Fenoxycarb; d) Lipid-Biosyntheseinhibitors wie Spirodiclofen, Spiromesifen, Spirotetramat;
   - Agonisten/Antagonisten der Nicotin Rezeptoren: Acetamiprid, Clothianidin, Dinotefuran, Imidacloprid, Nitenpyram, Thiacloprid, Thiamethoxam, Nicotin, Bensultap, Cartap-hydrochloride, Thiocyclam, Natrium-Thiosultap und AKD1022;
   - GABA Antagonisten wie Acetoprol, Chlordan, Endosulfan, Ethiprol, gamma-HCH (Lindan), Fipronil, Vaniliprol, Pyrafluprol, Pyriprol, die Phenylpyrazol-Verbindung der Formel ┌1 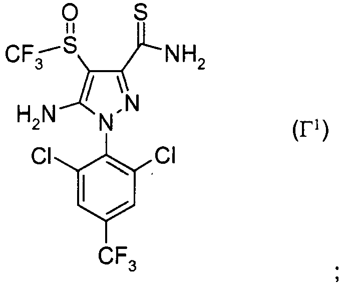
   - Macrocyclische Lactone wie Abamectin, Emamectin, Emamectinbenzoate, Milbemectin, Lepimectin, Spinosad;
   - METI I Verbindungen wie Fenazaquin, Fenpyroximat, Flufenerim, Pyridaben, Pyrimidifen, Rotenon, Tebufenpyrad, Tolfenpyrad;
   - METI II und III Verbindungen wie Acequinocyl, Fluacryprim, Hydramethylnon,
   - Entkopplungsverbindungen wie Chlorfenapyr, DNOC;
   - Inhibitoren der oxidativen Phosphorylierung wie Azocyclotin, Cyhexatin, Diafenthiuron, Fenbutatinoxid, Propargit, Tetradifon;
   - Häutungshemmer: Cyromazine, Chromafenozide, Halofenozide, Methoxyfenozide, Tebufenozide;
   - Synergisten wie Piperonylbutoxid und Tribufos;
   - Natrium-Kanal-Blocker wie Indoxacarb, Metaflumizone;
   - Selektive Hemmstoffe der Nahrungsaufnahme: Crylotie, Pymetrozine, Flonicamid;
   - Inhibitoren des Milbenwachstums: Clofentezine, Hexythiazox, Etoxazole;
   - Chitinsynthese-Inhibitoren wie Buprofezin, Bistrifluron, Chlorfluazuron, Diflubenzuron, Flucycloxuron, Flufenoxuron, Hexaflumuron, Lufenuron, Novaluron, Noviflumuron, Teflubenzuron, Triflumuron;
   - Lipidbiosyntheseinhibitoren wie Spirodiclofen, Spiromesifen, Spirotetramat;
   - Octapaminerge Agonsiten wie Amitraz;
   - Modulatoren des Ryanodin-Rezeptors wie Flubendiamide;
   - Verschiedene: Amidoflumet, Benclothiaz, Benzoximate, Bifenazate, Bromopropylate, Cyenopyrafen, Cyflumetofen, Chinomethionate, Dicofol, Fluoroacetate, Pyridalyl, Pyrifluquinazon, N-R'-2,2-Dihalo-1-R"-cyclopropancarboxamid-2-(2,6-dichlor-α,α,α-trifluor-p-tolyl)hydrazon, N-R'-2,2-Di(R"')propionamid-2-(2,6-dichlor-α,α,α-trifluor-p-tolyl)-hydrazon, worin R' für Methyl oder Ethyl steht, Halo für Chlor oder Brom steht, R" für Wasserstoff oder Methyl steht und R"' für Methyl oder Ethyl steht;
   - Anthranilamide wie Chloranthraniliprole und Cyanthraniliprole;
   - Malononitril-Verbindungen wie CF₃(CH₂)₂C(CN)₂CH₂(CF₂)₃CF₂H, CF₃(CH₂)₂C(CN)₂CH₂(CF₂)₅CF₂H , C F₃(CH₂)₂C(CN)₂(CH₂)₂C(CF₃)₂F, CF₃(CH₂)₂C(CN)₂(CH₂)₂(CF₂)₃CF₃, CF₂H(CF₂)₃CH₂C(CN)₂CH₂(CF₂)₃CF₂H, CF₃(CH₂)₂C(CN)₂CH₂(CF₂)₃CF₃, CF₃(CF₂)₂CH₂C(CN)₂CH₂(CF₂)₃CF₂H, CF₃CF₂CH₂C(CN)₂CH₂(CF₂)₃CF₂H , 2-(2,2,3,3,4,4,5,5-octafluorpentyl)-2-(3,3,4,4,4-pentafluorobutyl)-malonodinitrile, und CF₂HCF₂CF₂CF₂CH2_{C}(CN)2CH₂CH₂CF₂CF₃;
   - Pyrimidinylalkinylether der Formel Γ³ oder Thiadiazolylalkinylether der Formel Γ⁴: 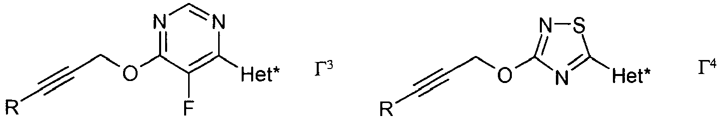
   worin R für Methyl oder Ethyl steht und Het* für 3,3-Dimethylpyrrolidin-1-yl, 3-Methylpiperidin-1-yl, 3,5-Dimethylpiperidin-1-yl, 4-Methylpiperidin-1-yl, Hexa-hydroazepin-1-y I , 2 , 6-Dimethylhexahydroazepin-1-yl oder 2,6-Dimethylmorpholin-4-yl steht. Diese Verbindungen werden beispielsweise in JP 2006 131529 beschrieben.

Bevorzugt sind auch Mischungen der genannten Wirkstoffe, wobei neben Mischungen verschiedener Fungizide, Herbizide und Insektizide jeweils untereinander insbesondere auch Mischungen von Fungiziden und Insektiziden bevorzugt sind.

In einer bevorzugten Ausführungsform ist der Wirkstoff ein Fungizid, besonders bevorzugt ausgewählt aus den Gruppen der
- Azole, insbesondere
   - Triazole, wie Cyproconazole, Epoxiconazole, Fluquinconazole, Hexaconazole, Metconazole, Penconazole, Propiconazole, Prothioconazole, Tebuconazole und Triticonazole, bevorzugt Epoxiconazole, Metconazole, Fluquinconazole und Prothioconazole,
   - Imidazole, wie Cyazofamid, Imazalil, Pefurazoate, Prochloraz und Triflumizole, bevorzugt Prochloraz;
- Strobilurine, insbesondere Azoxystrobin, Dimoxystrobin, Fluoxastrobin, Kresoximmethyl, Metominostrobin, Orysastrobin, Picoxystrobin, Pyraclostrobin und Trifloxystrobin, bevorzugt Pyraclostrobin;
- 6-Aryl-[1,2,4]triazolo-[1,5-a]-pyrimidinen, z. B. 5-Chlor-7-(4-methyl-piperidin-1-yl)-6-(2,4,6-trifluor-phenyl)-[1,2,4]triazolo[1,5-a]pyrimidin;
- Carbonsäureamide, insbesondere Carbonsäureanilide, insbesondere Benalaxyl, Benodanil, Bixafen, Boscalid, Fluopyram, Isopyrazam, Sedaxane, Carboxin, Mepronil, Fenfuram, Fenhexamid, Flutolanil, Furametpyr, Metalaxyl, Ofurace, Oxadixyl, Oxycarboxin, Penthiopyrad, Thifluzamide, Tiadinil, 4-Difluormethyl-2-methyl-thiazol-5-carbonsäure-(4'-brom-biphenyl-2-yl)-a m i d , 4-Difluormethyl-2-methyl-thiazol-5-carbonsäure-(4'-trifluormethyl-biphenyl-2-yl)-amid, 4-Difluormethyl-2-methyl-thiazol-5-carbonsäure-(4'-chlor-3'-fluor-biphenyl-2-yl)-amid, 3-Difluormethyl-1-methyl-pyrazol-4-carbonsäure-(3',4'-dichlor-4-fluor-biphenyl-2-yl)-amid, 3-Difluormethyl-1-methyl-pyrazol-4-carbonsäure-(3',4'-di-chlor-5-fluor-biphenyl-2-yl)-amid, 3,4-Dichlorisothiazol-5-carbonsäure-(2-cyano-phenyl)-amid, N-(3',4',5'-Trifluorbiphenyl-2-yl)-3-difluormethyl-1-methyl-1H-pyrazol-4-carboxamid, N-[2-(4'-trifluormethylthio)-biphenyl]-3-difluormethyl-1-methyl-1H-pyrazol-4-carboxamid, N-[2-(1,3-dimethylbutyl) phenyl]-1,3-dimethyl-5-fluor-1H-pyrazol-4-carboxamid, N-(2-bicyclopropyl-2-yl-phenyl)-3-difluormethyl-1-methyl-1H-pyrazol-4-carboxamid, N-(cis-2-bicyclopropyl-2-yl-phenyl)-3-difluormethyl-1-methyl-1H-pyrazol-4-carboxamid, N-(trans-2-bicyclopropyl-2-yl-phenyl)-3-difluormethyl-1-methyl-1H-pyrazol-4-carboxamid, N-[1,2,3,4-Tetrahydro-9-(1-methylethyl)-1,4-methanonaphthalin-5-yl]-3-difluormethyl-1-methyl-1H-pyrazol-4-carboxamid, Ethaboxam und Penthiopyrad;
- Morpholine, wie Aldimorph, Dodemorph, Fenpropimorph, Tridemorph, bevorzugt Fenpropimorph;
- und Mischungen dieser Wirkstoffe.

Besonders bevorzugte Wirkstoffe sind Azolfungizide, insbesondere die aufgeführten, vorzugsweise auch in Mischung mit Strobilurinen, insbesondere den aufgeführten, und/oder Carbonsäureamiden, insbesondere den aufgeführten und/oder Morpholinen, insbesondere den aufgeführten.

Bevorzugt sind Mischungen, enthaltend zwei oder mehrere Azolfungizide, insbesondere den vorgenannten.

Bevorzugt sind auch Mischungen, enthaltend mindestens ein Azolfungizid und mindestens ein Strobiluirin, insbesondere den vorgenannten.

Bevorzugt sind auch Mischungen, enthaltend mindestens ein Azolfungizid und mindestens ein Morpholin, insbesondere den vorgenannten.

Bevorzugt sind auch Mischungen, enthaltend mindestens ein Azolfungizid, mindestens ein Strobilurin und mindestens ein Carbonsäureamid, insbesondere den vorgenannten.

Bevorzugt sind auch Mischungen, enthaltend mindestens ein Azolfungizid und ein Carbonsäureamid, insbesondere den vorgenannten.

Die erfindungsgemäßen Wirkstoffzusammensetzungen enthalten neben einem oder mehreren Copolymeren (A) und einem oder mehreren Wirkstoffen (B) gegebenenfalls auch ein oder mehrere Lösungs- und/oder Verdünnungsmittel (Komponente (C)) und/oder ein oder mehrere übliche Formulierungshilfsmittel (Komponente (D)). So können beispielsweise zur Herstellung der Copolymere sowie bei der Herstellung der Formulierungen eingesetzten Lösungsmittel in der erfindungsgemäßen Formulierung enthalten sein.

In einer Ausführungsform können die erfindungsgemäßen Formulierungen in Form einer flüssigen Lösung vorliegen. Geeignete Lösungsmittel zur Herstellung der Wirkstoffzusammensetzung sind beispielsweise Mischungen von Alkylaromaten, besonders Alkylbenzole und Alkylnaphthalene, die Alkylgruppen mit 1 bis 20 Kohlenstoffatomen tragen. Solche Mischungen sind kommerziell erhältlich, z. B. Solvesso^{®}, wie Solvesso 200 (Exxon Mobil, USA), Aromaten, z. B. Aromatic 200 (Exxon Mobil), oder Shellsol^{®} Produkte (Deutsche Shell Chemie GmbH, Germany). Andere geeignete organische Lösungsmittel sind Paraffine, Alkohole, Pyrrolidone, Acetate, Glycole, Fettsäuren, Dimethylamide, Fettsäure-Dimethylamide, Fettsäure-Ester, Pflanzenöle wie Kokosöl, Palmkernöl, Palmöl, Sojaöl, Rapsöl, Maisöl und die Methyl- oder Ethylester der vorstehend genannten Öle sowie Mischungen davon. Weitere geeignete Lösungsmittel sind Tributylphosphat, Methanol, Ethanol, Isopropanol, 1-Butanol, 2-Butanol, tert-Butanol, Pentanol, Hexanol, 2-Ethylhexanol, 1,3-Dimethyl-2-imidazolinon, 2-Methyl-2,4-pentanediol, Aceton, Acetophenon, Propansäure, 2-Hydroxy-2-ethylhexylester, Din-octylcarbonat, Ethylencarbonat, Propylencarbonat, Butylencarbonat, Dibasische Ester wie Adipinsäuredimethylester, Bernsteinsäuredimethylester, Glutarsäuredimethylester und deren Mischungen oder Diisobutylderivate von Benzylacetat, Benzylalkohol, Benzylbenzoat, Cyclohexan, Cyclohexanol, Cyclohexanon, Butyllactat, 2-Ethylhexyllactat, Ethyllactat, Methyllactat, n-Propyllactat, Tetrahydrofurfurylalkohol, Xylol, Diethylenglykol, Dimethylformamid, Dimethylsulfoxid, Dipropylenglycol, 5-Methyl-3-heptanon, Glykol, und Derivate wie z.B. Polyethylenglykol, Glycerin, Propylenglykol, Propylenglykolmonomethyletheracetat, Dipropylenglykolmonomethylether, Propyleneglykol Monophenylether; Butyrolacton, Glycerin, Methylbenzoat, n-Ethyl-2-pyrrolidon, n-Methylcaprolactam, n-Octyl-2-pyrrolidon, Propansäure, sowie Ether, wie Tetrahydrofuran und Dioxan, Wasser, sowie Mischungen dieser Lösungsmittel, Ester, Ketone wie Aceton, Methylethylketon, Methylisopropylketon, Methylisobutylketon, Acetale, Ether, cyclische Ether wie Tetrahydrofuran, aliphatische Carbonsäuren wie Ameisensäure, Essigsäure, Propionsäure, Carbonsäureester wie beispielsweise Essigester und Lactone wie beispielsweise Butyrolacton, aliphatische und aromatische Chlorkohlenwasserstoffe wie Methylenchlorid, Chloroform, 1,2-Dichlorethan oder Chlorbenzol, sowie Mischungen der genannten Lösungsmittel.

Die genannten Lösungsmittel eignen sich grundsätzlich auch zur Herstellung von emulgierbaren Konzentraten (EC), wasserverdünnbaren Konzentraten (DC), öligen Suspensionen, Öldispersionen und ähnlichen Formulierungen.

Feste Formulierungen können in unterschiedlichen makroskopischen Formen vorliegen, genannt seien beispielsweise sprühgetrocknetes Pulver, Mahlgut, Granulat oder Film.

Als Verdünnungsmittel und inerte Trägerstoffe sind beispielsweise Mineralerden wie Kieselsäure, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie Ammoniumsulfat, Ammoniumphosphat, Ammoniumnitrat, Harnstoffe und pflanzliche Produkte wie Getreidemehl, Baumrinden-, Holz- und Nussschalenmehl oder Cellulosepulver geeignet.

Daneben können die Wirkstoffzusammensetzungen (d.h. die Formulierungen und die durch Verdünnung erhältlichen wässrigen Applikationsformen) als Komponente (D) übliche Formulierungshilfsmittel in den hierfür üblichen Mengen enthalten. Hierzu zählen beispielsweise Mittel zur Modifizierung der Rheologie (Verdicker), Antischaummittel, Bakterizide, Frostschutzmittel Mittel zur Steuerung des pH-Wertes, Stabilisatoren und Weichmacher.

Geeignete Verdicker sind Verbindungen, die wässrigen Zusammensetzungen ein pseudoplastisches Fließverhalten verleihen, d. h. hohe Viskosität im Ruhezustand und niedrige Viskosität im bewegten Zustand. Hier sind beispielsweise Polysaccharide wie Xanthan (Kelzan^{®} der Fa. Kelco; Rhodopol^{®} 23 von Rhone Poulenc; oder Veegum^{®} der Firma R.T. Vanderbilt) sowie anorganische Schichtmineralien wie Attaclay^{®} (Firma Engelhardt) zu nennen, wobei Xanthan bevorzugt verwendet wird.

Geeignete Stabilisatoren können niedermolekulare Komponenten sein, wie beispielsweise Mono- und Diglyceride, Ester der Monoglyceride, Alkylglucoside, Lecithin, Fettsäurederivate von Harnstoff und Urethanen.

Geeignete Weichmacher sind Saccharose, Glucose, Lactose, Fructose, Sorbit, Mannit oder Glycerin.

Als für die erfindungsgemäßen Zusammensetzungen geeignete Antischaummittel kommen beispielsweise Silikonemulsionen (wie z. B. Silikon^{®} SRE, Firma Wacker oder Rhodorsil^{®} der Firma Rhodia), langkettige Alkohole, Fettsäuren, fluororganische Verbindungen und deren Gemische in Betracht.

Bakterizide können zur Stabilisierung den erfiindungsgemäßen Zusammensetzungen gegen Befall mit Mikroorganismen zugesetzt werden. Hierbei handelt es sich typischerweise um Isothiazolon-Verbindungen, z. B. 1,2-Benzisothiazolin-3-on, 5-Chlor-2-methylisothiazol-3-on, 2-Methylisothiazol-3-on oder 2-Octylisothiazol-3-on, die beispielsweise unter den Handelsbezeichnungen Proxel^{®} der Fa. Arch Chemical Inc., Acticide^{®} RS der Fa. Thor Chemie und Kathon^{®} MK der Firma Rohm & Haas erhältlich sind.

Geeignete Frostschutzmittel sind organische Polyole, z. B. Ethylenglycol, Propylenglycol oder Glycerin. Diese werden in wässrigen Formulierungen eingesetzt, üblicherweise in Mengen von nicht mehr als 20 Gew.-%, z. B. 1 bis 20 Gew.-% und insbesondere 2 bis 10 Gew.-%, bezogen auf das Gesamtgewicht der wässrigen Wirkstoffformulierung.

Gegebenenfalls können die Wirkstoffzusammensetzungen 1 bis 5 Gew.-%, bezogen auf die Gesamtmenge der hergestellten Zubereitung, Mittel zur pH-Wert Regulation der Zubereitung oder der verdünnten Applikationsform enthalten, wobei sich die Menge und Art des eingesetzten Mittels nach den chemischen Eigenschaften und der Menge der Wirkstoffe und des Copolymers (A) richtet. Beispiele für Puffer sind Alkalisalze schwacher anorganischer oder organischer Säuren wie z. B. Phosphorsäure, Borsäure, Essigsäure, Propionsäure, Citronensäure, Fumarsäure, Weinsäure, Oxalsäure und Bernsteinsäure.

Beispiele für konventionelle oberflächenaktive Substanzen sind die im Folgenden angegebenen nichtionischen, anionischen, kationionische oder zwitterionischen Emulgatoren, Netzmittel oder Dispergiermittel, z.B. die nichtionischen Substanzen der Gruppen b1) bis b17)
b1) aliphatische C₈-C₃₀-Alkohole, die alkoxyliert sein können, z.B. mit 1 - 60 Alkylenoxideinheiten, vorzugsweise 1-60 EO und/oder 1-30 PO und/oder 1-15 BO in beliebiger Reihenfolge. Hierbei steht EO für eine von Ethylenoxid, PO für eine von Propylenoxid und BO für eine von Butylenoxid abgeleitete Wiederholungseinheit. Die terminalen Hydroxygruppen dieser Verbindungen können durch einen Alkyl-, Cycloalkyl- oder Acylrest mit 1-24, insbesondere 1 bis 4 Kohlenstoffatomen endgruppenverschlossen sein. Beispiele für derartige Verbindungen sind: Genapol^{®}C-,L-,O-,T-,UD-,UDD-,X-Produkte der Clariant, Plurafac^{®}- und Lutensol^{®}A-, AT-, ON-, TO-, M-Produkte der BASF SE, Marlipal^{®}24- und 013 Produkte von Condea, Dehypon^{®}-Produkte von Henkel, Ethylan^{®}-Produkte von Akzo- Nobel wie Ethylan CD 120;
b2) Copolymere bestehend aus EO, PO und/oder BO Einheiten, insbesondere EO/PO-Blockcopolymere wie die Pluronic^{®}-Produkte von der BASF SE und die Synperonic^{®}-Produkte von Uniquema mit einem Molekulargewicht von 400 bis 10⁶ Dalton sowie Alkylenoxydaddukte von C₁-C₉ Alkoholen wie Atlox^{®}5000 von Uniquema oder Hoe^{®}-S3510 von Clariant;
b3) Fettsäure- und Triglyceridalkoxylate wie die Serdox^{®}NOG-Produkte von Condea sowie alkoxylierte Pflanzenöle wie Sojaöl, Rapsöl, Maiskeimöl, Sonnenblumenöl, Baumwollsaatöl, Leinöl, Kokosöl, Palmöl, Distelöl, Walnussöl, Erdnussöl, Olivenöl oder Rhizinusöl, insbesondere Rapsöl, beispielsweise die Emulsogen^{®}-Produkte von Clariant;
b4) Fettsäureamidalkoxylate wie die Comperlan^{®}-Produkte von Henkel oder die A-mam^{®}-Produkte von Rhodia;
b5) Alkylenoxydaddukte von Alkindiolen wie die Surfynol^{®}-Produkte von Air Products. Zuckerderivate wie Amino- und Amidozucker von Clariant.Glukitole von Clariant, Alkylpolyglycoside in Form der APG^{®}-Produkte von Henkel oder wie Sorbitanester in Form der Span^{®}- oder Tween^{®}-Produkte von Uniquema oder Cyclodextrinester oder -ether von Wacker;
b6) oberflächenaktive Cellulose- und Algin-, Pektin- und Guarderivate wie die Tylose^{®}-Produkte von Clariant, die Manutex^{®}-Produkte von Kelco und Guarderivate von Cesalpina;
b7) Alkylenoxydaddukte auf Polyolbasis wie Polyglykol^{®}-Produkte von Clariant;
b8) grenzflächenaktive Polyglyceride und deren Derivate von Clariant;
b9) Zuckertenside, z.B. alkoxylierte Sorbitanfettsäureester, Alkylpolyglykoside und deren alkoxylierte Derivate;
b10) Alkylenoxidaddukte von Fettaminen;
b11) oberflächenaktive Verbindungen auf Silikon- bzw Silanbasis wie die Tegopren^{®}-Produkte von Goldschmidt und die SE^{®}-Produkte von Wacker, sowie die Bevaloid^{®}-, Rhodorsil^{®}- und Silcolapse^{®}-Produkte von Rhodia (Dow Corning, Reliance, GE, Bayer);
b12) per- oder polyfluorierte oberflächenaktive Verbindungen wie Fluowet^{®}-Produkte von Clariant, die Bayowet^{®}-Produkte von Bayer, die Zonyl^{®}-Produkte von DuPont und Produkte dieser Art von Daikin und Asahi Glass;
b13) grenzflächenaktive Sulfonamide z.B. von Bayer;
b14) neutrale tensidische Polyvinylverbindungen wie modifiziertes Polyvinylpyrollidon wie die Luviskol^{®}-Produkte von BASF und die Agrimer^{®}-Produkte von ISP oder die derivatisierten Polyvinylacetate wie die Mowilith^{®}-Produkte von Clariant oder die -butyrate wie die Lutonal^{®}-Produkte von der BASF.die Vinnapas^{®}- und die Pioloform^{®}-Produkte von Wacker oder modifizierten Polyvinylalkohole wie die Mowiol^{®}-Produkte von Clariant, und oberfächenaktive Derivate von Montan-, Polyethylen- und Polypropylenwachsen wie die Hoechst^{®}-wachse oder die Licowet^{®}-Produkte von Clariant;
b15) poly- oder perhalogenierte Phosphonate und Phosphinate wie Fluowet^{®}-PL von Clariant;
b16) poly- oder perhalogenierte neutrale Tenside wie beispielsweise Emulsogen^{®}-1557 von Clariant;
b17) (poly)alkoxylierte, insbesondere polyethoxylierte aromatische Verbindungen wie (poly)alkoxylierte Phenole [= Phenol-(poly)alkylenglykolether], beispielsweise mit 1 bis 50 Alkylenoxy-Einheiten im (Poly)alkylenoxyteil, wobei der Alkylenteil vorzugsweise jeweils 2 bis 4 C-Atome aufweist, vorzugsweise mit 3 bis 10 mol Alkylenoxid umgesetztes Phenol, (Poly)alkylphenolalkoxylate [= Polyalkylphenol-(poly)alkylenglykolether], beispielsweise mit 1 bis 12 C-Atomen pro Alkylrest und 1 bis 150 Alkylenoxy-Einheiten im Polyalkylenoxyteil, vorzugsweise mit 1 bis 50 mol Ethylenoxid umgesetztes Tri-n-butylphenol oder Triisobutylphenol, Polyarylphenole oder Polyarylphenolalkoxylate [= Polyarylphenol- (poly)alkylenglykolether], beispielsweise Tristyrylphenolpolyalkylenglykolether mit 1 bis 150 Alkylenoxy-Einheiten im Polyalkylenoxyteil, vorzugsweise mit 1 bis 50 mol Ethylenoxid umgesetztes Tristyrylphenol und deren Kondensationsprodukte mit Formaldehyd - hierunter bevorzugt sind mit 4 bis 10 mol Ethylenoxid umgesetztes Alkylphenol, kommerziell beispielsweise in Form der Agrisol^{®}-Produkte (Akcros) erhältlich, mit 4 bis 50 mol Ethylenoxid umgesetztes Triisobutylphenol, kommerziell beispielsweise in Form der Sapogenat^{®} T-Produkte (Clariant) erhältlich, mit 4 bis 50 mol Ethylenoxid umgesetztes Nonylphenol, kommerziell beispielsweise in Form der Arkopal^{®}-Produkte (Clariant) erhältlich, mit 4 bis 150 mol Ethylenoxid umgesetztes Tristyrylphenol, beispielsweise aus der Soprophor^{®}-Reihe wie Soprophor^{®} FL, Soprophor^{®} 3D33, Soprophor^{®} BSU, Soprophor^{®} 4D-384, Soprophor^{®} CY/8 (Rhodia);
   die anionischen Substanzen der Gruppen b18) bis b24)
b18) anionische Derivate der unter b1) beschriebenen Produkte in Form von Ethercarboxylaten, Sulfonaten, Sulfaten (= Schwefelsäurehalbestern) und Phosphaten (Phosphorsäuremono- oder diester) der unter b1) beschriebenen Substanzen und deren anorganische (z.B NH₄⁺, Alkali und Erdalkalimetallsalze) und organische Salzen (z.B. auf Amin- oder Alkanolaminbasis) wie Genapol^{®}LRO, Sandopan^{®}-Produkte, Hostaphat/Hordaphos^{®}-Produkte von Clariant;
b19) anionische Derivate der unter b17) beschriebenen Produkte in Form von Ethercarboxylaten, Sulfonaten, Sulfaten (= Schwefelsäurehalbestern) und Phosphaten (Phosphorsäuremono- oder diester) der unter b17) beschriebenen Substanzen beispielsweise der saure Phosphorsäureester eines mit 2 bis 10 Mol Athylenoxyid ethoxylierten C₁-C₁₆-Alkylphenols, z.B. der saure Phosphorsäureester eines mit 3 mol oder mit 9 mol Ethylenoxid umgesetzten Nonylphenols und der mit Triethanolamin neutralisierte Phosphorsäureester des Reaktionsproduktes von 20 mol Ethylenoxid und 1 mol Tristyrylphenol;
b20) Benzolsulfonate wie Alkyl- oder Arylbenzolsulfonate, z.B. saure und mit geeigneten Basen neutralisierte (Poly)alkyl- und (Poly)aryl-benzolsulfonate, beispielsweise mit 1 bis 12 C-Atomen pro Alkylrest bzw. mit bis zu 3 Styroleinheiten im Polyarylrest, vorzugsweise (lineare) Dodecylbenzolsulfonsäure und deren öl-lösliche Salze wie beispielsweise das Calciumsalz oder das Isopropylammoniumsalz der Dodecylbenzolsulfonsäure und saures (lineares) Dodecylbenzolsulfonat, kommerziell beispielsweise in Form der Marlon^{®}-Produkte (Hüls);
b21) Ligninsulfonate wie Natrium-, Calcium-, oder Ammoniumligninsulfonate wie Ufoxane^{®} 3A, Borresperse AM^{®}320 oder Borresperse^{®} NA;
b22) Kondensationsprodukte von Arylsulfonsäuren wie Phenolsulfonsäure oder Naphthalinsulfonsäure mit Formaldehyd und gegebenenfalls Harnstoff, insbesondere deren Salze und speziell die Alkalimetallsalze und Calcium-Salze, z.B. die Tamol^{®}- und Wettol^{®}-Marken der BASF SE wie Wettol^{®} D1;
b23) Salze von aliphatischen, cycloaliphatischen und olefinischen Carbonsäuren und Polycarbonsäuren, sowie Alpha-Sulfofettsäureester wie von Henkel erhältlich;
b24) Alkansulfonate, Paraffin- und Olefinsulfonate wie Netzer IS^{®}, Hoe^{®}S1728, Hostapur^{®}OS, Hostapur^{®}SAS von Clariant;
   weiterhin kationische und zwitterionische Produkte der Gruppen b25) und b26):
b25) quartäre Ammonium-Verbindungen mit 8 bis 22 Kohlenstoffatomen (C₈-C₂₂) wie z.B. die Genamin^{®}C,L,O,T-Produkte von Clariant;
b26) oberflächenaktive, zwitterionische Verbindungen wie Tauride, Betaine und Sulfobetaine in Form von Tegotain^{®}-Produkte von Goldschmidt, Hostapon^{®}T- und Arkopon^{®}T-Produkte von Clariant.

Bei den Alkylenoxyeinheiten sind Ethylenoxy-, Propylenoxy- und Butylenoxyeinheiten, insbesondere Ethylenoxyeinheiten und Gemische aus Ethylenoxy- und Propylenoxy-Einheiten bevorzugt. Alkoxyliert bedeutet, dass die die oberflächenaktive Substanz eine Polyalkylenethergruppe aufweist, insbesondere eine Poly-C₂-C₄-alkylenethergruppe, speziell eine Poly-C₂-C₃-alkylenethergruppe.

Erfindungsgemäße Formulierungen sind bevorzugt solche, die vor der Anwendung mit Wasser verdünnt werden.

Die Erfindung betrifft auch Verfahren zur Herstellung von wässrigen Dispersionen enthaltend eine erfindungsgemäße Wirkstoffformulierung, ein wässriges System und optional weitere Zusatzstoffe, wobei man die Formulierung mit einem wässrigen System in Kontakt bringt und in üblicher Weise dispergiert.

Unter wässrigem System wird reines Wasser oder Wasser enthaltend ein Puffersystem oder Salze oder weitere Zusatzstoffe, beispielsweise mit Wasser mischbare Lösungsmittel oder Mischungen daraus, verstanden. Der pH-Wert des wässrigen Systems liegt im allgemeinen im Bereich von 2 bis 13, bevorzugt von 3 bis 12, besonders bevorzugt von 4 bis 10.

Beispiele für erfindungsgemäße Formulierungen sind
- wässrige Formulierungen, in denen der Wirkstoff in suspendierter bzw. dispergierter Form vorliegt (sogenannte SC-Formulierungen);
- mit Wasser verdünnbare emulgierbare Konzentrate (sogenannte EC-Formulierungen), in denen der Wirkstoff gelöst in einem mit Wasser nicht mischbaren Lösungsmittel, beispielsweise einem Kohlenwasserstoff oder einem Pflanzenöl oder Pflanzenölderivat wie einem Pflanzenölmethylester gelöst vorliegt;
- mit Wasser verdünnbare Konzentrate, in denen der Wirkstoff gelöst in einem mit Wasser mischbaren Lösungsmittel, beispielsweise einem Lactam, wie N-methylpyrrolidon, einem Lacton wie Butyrolacton, einem cyclischen Carbonat wie Ethylen- oder Propylencarbonat, einem Alkanol oder Alkandiol wie Ethanol, Propanol, propylenglykol oder einer Mischung davon gelöst vorliegt (sogenannte DC-Formulierungen),
- feste Formulierungen wie Pulver oder Granulate, die mit Wasser verdünnbar sind (d.h. wasserlöslich oder dispergierbar) und die typischerweise einen festen Träger enthalten;
- dispergierbare Konzentrate;
- Emulsionen;
- Suspensionen;
- wasserdispergierbare und wasserlösliche Granulate und
- Gele.

Gegebenenfalls können die Dispersionen 1-5 Gew.% Puffer bezogen auf die Gesamtmenge der hergestellten Formulierung zur pH-Wert Regulation enthalten, wobei sich die Menge und Art des eingesetzten Puffers nach den chemischen Eigenschaften des Wirkstoffes bzw. der Wirkstoffe richtet. Beispiele für Puffer sind Alkalisalze schwacher anorganischer oder organischer Säuren wie z.B. Phosphorsäure, Borsäure, Essigsäure, Propionsäure, Zitronensäure, Fumarsäure, Weinsäure, Oxalsäure und Bernsteinsäure.

Bevorzugt ist die Verwendung der erfindungsgemäß hergestellten Pflanzenschutzformulierungen in fester oder gelöster Form zur Bekämpfung von Schadpilzen im Agrarbereich, wobei mindestens ein Wirkstoff gelöst sein muss.

Die erfindungsgemäßen Wirkstoffzusammensetzungen eignen sich zur Verwendung im Pflanzenschutz, vorzugsweise zur Bekämpfung von phytopathogenen Mikroorganismen, insbesondere Pilzen, tierischen Schädlingen, insbesondere schädlichen Arthropoden, wie Insekten und Spinnentieren, und Nematoden sowie Schadpflanzen. Bevorzugt ist die Verwendung zur Bekämpfung von phytopathogenen Mikroorganismen, insbesondere Pilzen.

Weiterhin Gegenstand der Erfindung ist ein Verfahren zur Bekämpfung von Schadorganismen aus der Gruppe der phytopathogenen Mikroorganismen, insbesondere Pilze, tierischen Schädlingen, insbesondere schädlichen Arthropoden, wie Insekten und Spinnentiere, und Nematoden, und Schadpflanzen, wobei man die Schadorganismen, deren Lebensraum oder die zu schützenden Pflanzen, Flächen, Materialien oder Räume mit einer erfindungsgemäßen Wirkstoffzusammensetzung, vorzugsweise in einer wirksamen Menge, behandelt.

Bevorzugt ist ein Verfahren zur Bekämpfung von phytopathogenen Mikroorganismen, insbesondere Pilzen.

Die erfindungsgemäße Wirkstoffzusammensetzung eignet sich auch zur Behandlung von Saatgut.

Ein weiteres Anwendungsgebiet ist die Tiergesundheit, wobei sich die erfindungsgemäße Wirkstoffzusammensetzung zur Verwendung in einem Verfahren zur Bekämpfung von Parasiten bei Tieren eignet, wobei das Tier mit der Wirkstoffzusammensetzung, vorzugsweise in einer wirksamen Menge, behandelt wird.

Weiterhin eignen sich erfindungsgemäße Wirkstoffzusammensetzungen zur Herstellung eines Tierarzneimittels, insbesondere zur Bekämpfung von Parasiten.

Die Erfindung wird durch die Beispiele näher erläutert, ohne sie dadurch zu beschränken.

### Beispiele

### A Synthesebeispiele

### Synthesebeispiel 1:

### Herstellung eines statistischen radikalischen Copolymers A.1

In einem 2L-Polymerisationsreaktor mit aufgesetztem Rückflusskühler wurden unter Rühren 150,00 g Isopropanol auf 70 °C erhitzt. Innerhalb von 3,5 h wurde sowohl eine Lösung von 58,25 g Methylmethacrylat (MMA), 19,81 g Dodecylacrylat (DDA) und 38,45 g 2-Acrylamido-2-methyl-1-propansulfonsäure (AMPS) in einem Gemisch aus 45,33 g Wasser und 438,33 g Isopropanol als auch eine Lösung von 3,50 g 2,2'-Azobis(isobutyronitril) (AIBN) in 45,33 g Tetrahydrofuran (THF) über getrennte Zuläufe langsam und gleichmäßig dem Ansatz zugeführt. Die Reaktionsmischung wurde unter Beibehaltung der Innentemperatur (70 °C) für weitere 16 h gerührt. Anschließend waren keine Restmonomere mehr nachweisbar. Der leicht trübe, farblose Ansatz wurde filtriert und das Filtrat im Vakuum von den Lösungsmitteln befreit. Das Copolymer A.1 (Mₙ = 5400 g/mol; M_{w} = 14600 g/mol) wurde in Form eines farblosen, amorphen Feststoffs erhalten. Die Glasübergangstemperatur des Copolymers betrug 55 °C.

### Synthesebeispiel 2:

### Herstellung eines statistischen radikalischen Copolymers A.2

In einem 2L-Polymerisationsreaktor mit aufgesetztem Rückflusskühler wurde unter Rühren ein Gemisch aus 35,50 g Wasser und 67,48 g Isopropanol auf 75 °C erhitzt. Innerhalb von 3 h wurde eine Lösung von 71,61 g MMA, 9,39 g DDA, 7,59 g TDA und 54,41 g AMPS in einem Gemisch aus 64,90 g Wasser und 357,60 g Isopropanol sowie gleichzeitig innerhalb von 3,5 h eine Lösung von 6,77 g 2,2'-Azobis(2-methylpropion-amidin)dihydrochlorid (WAKO V-50) in 327,50 g Wasser über getrennte Zuläufe langsam und gleichmäßig dem Ansatz zugeführt. Die Reaktionsmischung wurde nach Beendigung des letzten Zulaufs unter Beibehaltung der Innentemperatur (75 °C) für weitere 6,5 h gerührt. Anschließend waren keine Restmonomere mehr nachweisbar. Der leicht trübe, farblose Ansatz wurde filtriert und das Filtrat im Vakuum von den Lösungsmitteln befreit. Das Copolymer A.2 (Mₙ = 5300 g/mol; M_{w} = 12000 g/mol) wurde in Form eines farblosen, amorphen Feststoffs erhalten. Die Glasübergangstemperatur des Copolymers betrug 101 °C.

### Charakterisierung der erfindungsgemäßen Copolymere

Die Molmassen der Copolymere A.1 und A.2 wurden mittels Größenausschlusschromatographie ermittelt. Als Eluent diente Dimethylacetamid, versetzt mit 0,5 % Lithiumbromid; als Kalibrationssystem wurden Polymethylmethacrylat-Eichproben verwendet.

**Tabelle 1**

| Molmassen und Glasübergangstemperaturen der erfindungsgemäßen Copolymere A.1 und A.2. | | | | | | |
|---|---|---|---|---|---|---|
| **Polymer** | **LM** | **Initiator/ Regler** | **Mₙ** | **M_{w}** | **PD** | **T_{g}** |
| **A.1** | | | | | | |
| AMPS/MMA/DDA 33/50/17 Gew% | H₂O/i-PrOH/THF | AIBN/- | 5400 | 14600 | 2.7 | 55 °C |

| **A.2** | | | | | | |
|---|---|---|---|---|---|---|
| AMPS/MMA/DDA/TDA 38/50/7/5 Gew% | H₂O/i-PrO | V-50/- | 5300 | 12000 | 2.3 | 101 °C |

| | | | | | | |
|---|---|---|---|---|---|---|
| WAKO^{®} V-50 = 2,2'-Azobis(2-methylpropionamidin)dihydrochlorid AIBN = 2,2'-Azobis(isobutyronitril) AMPS =2-Acrylamido-2-methyl-1-propansulfonsäure MMA = Methylmethacrylat DDA = Dodecylacrylat TDA = Tetradecylacrylat THF = Tetrahydrofuran i-PrOH = Isopropanol | | | | | | |

### B Anwendungsbeispiele:

### Fungizide Wirkung erfindungsgemäßer Wirkstoffzusammensetzungen

### Kurative Wirksamkeit gegen Weizenbraunrost verursacht durch Puccinia recondita

Blätter von in Töpfen gewachsenen Weizensämlingen der Sorte "Kanzler" wurden mit einer Sporensuspension des Braunrostes (*Puccinia recondita*) inokuliert. Danach wurden die Töpfe für 24 Stunden in eine Kammer mit hoher Luftfeuchtigkeit (90 bis 95%) und 20 bis 22°C gestellt. Während dieser Zeit keimten die Sporen aus und die Keimschläuche drangen in das Blattgewebe ein. Die infizierten Pflanzen wurden am nächsten Tag mit den in Tabelle 2 beschriebenen Wirkstoffzusammensetzungen in der unten angegebenen Wirkstoffkonzentration bis zur Tropfnässe besprüht. Nach dem Antrocknen des Spritzbelages wurden die Versuchspflanzen im Gewächshaus bei Temperaturen zwischen 20 und 22°C und 65 bis 70% relativer Luftfeuchte für 7 Tage kultiviert. Dann wurde das Ausmaß der Rostpilzentwicklung auf den Blättern ermittelt.

In der nachfolgenden Tabelle 2 ist die fungizide Wirkung verschiedener Formulierungen von Pflanzenschutzwirkstoff in Abhängigkeit von der Konzentration an appliziertem Wirkstoff beurteilt.

Die Spalten "Zusammensetzung Formulierung" und "Wirkstoffkonzentration Formulierung" zeigen die qualitative und quantitative Zusammensetzung der jeweiligen Formulierung. Das Gewichtsverhältnis Polymer/Wirkstoff betrug für alle Formulierungen 2:1. Die Spalte "Wirkstoffkonzentration Spritzbrühe" gibt an, in welcher Konzentration der Wirkstoff bzw. das Wirkstoffgemisch appliziert wurde.

Die Spalte "Bonitur" gibt auf einer Skala von 0 bis 100 den verbleibenden Pilzbefall nach der Behandlung an, wobei die Zahl 100 Vollbefall bedeutet. Der angegebene Wert ist ein Mittelwert aus 3 Einzelwerten.

**Tabelle 2**

| | | | | |
|---|---|---|---|---|
| Fungizide Wirkung ausgewählter erfindungsgemäßer Formulierungen in Abhängigkeit von der Wirkstoffkonzentration | | | | |

| Beispiele | Zusammensetzung Formulierung | Wirkstoffkonzentration Formulierung (Gew.-%) | Wirkstoffkonzentration Spritzbrühe [ppm] | Bonitur (Mittelwert aus Messungen) |
|---|---|---|---|---|
| F-1 | A.1 + Metconazole/Epoxiconazole (3:2) + 10% Naphthalinsulfonsäure-Formaldehyd-K0ondensat | 30 | 50 | 11 |
| | | | 25 | 32 |
| | | | 12,5 | 55 |
| F-2 | A.2 + Metconazole/Epoxiconazole (3:2) + 10% Naphthalinsulfonsäure-Formaldehyd-Kondensat | 30 | 50 | 8 |
| | | | 25 | 22 |
| | | | 12,5 | 50 |
| F-3 | A.1 + Epoxiconazole/Pyraclostrobin (5:7) + 10% Naphthalinsulfonsäure-Formaldehyd-Kondensat | 30 | 64 | 15 |
| | | | 16 | 65 |
| | | | 4 | 70 |
| F-4 | A.2 + Epoxiconazole/Pyraclostrobin (5:7) + 10% Naphthalinsulfonsäure-Formaldehyd-Kondensat | 30 | 64 | 7 |
| | | | 16 | 35 |
| | | | 4 | 73 |
| Vergleich K-1 | Unbehandelt | 0 | 0 | 85 |
| Vergleich K-2 | A.1 | 0 | 0 | 80 |
| Vergleich K-3 | A.2 | 0 | 0 | 76 |

## Patentansprüche

1. Verfahren zur Herstellung von statistischen radikalischen Copolymeren, wobei man
a) mindestens eine olefinisch ungesättigte Sulfonsäure der Formel (I), 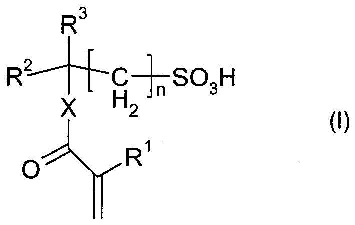 wobei
n 0 bis 10;
X O oder NR⁵;
R¹ Wasserstoff oder Methyl;
R², R³ unabhängig voneinander Wasserstoff oder C₁ bis C₆-Alkyl und
R⁵ Wasserstoff, Alkyl, Aryl, Alkylaryl, Arylalkyl, Alkoxyalkyl, Aryloxyalkyl, Alkoxyaryl, Hydroxyalkyl, (Di)Alkylaminoalkyl, (Di)Alkylaminoaryl, (Di)Arylaminoalkyl, Alkylarylaminoalkyl oder Alkylarylaminoaryl, wobei die Arylreste einfach oder mehrfach substituiert sein können,
bedeuten, Salze davon oder Mischungen aus Säure und Salzen und
b) mindestens zwei strukturell unterschiedliche olefinisch ungesättigte Monomere der Formel (II), 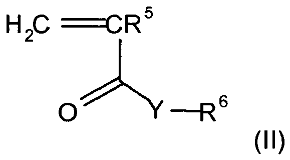 wobei
Y O oder NR⁷;
R⁵ Wasserstoff oder Methyl;
R⁶ Alkyl, Hydroxyalkyl, (Di)Alkylaminoalkyl oder (Di)Alkylaminoaryl und
R⁷ Wasserstoff, Alkyl, Aryl, Alkylaryl, Arylalkyl, Alkoxyalkyl, Aryloxyalkyl, Alkoxyaryl, Hydroxyalkyl, (Di)Alkylaminoalkyl, (Di)Alkylaminoaryl, (Di)Arylaminoalkyl, Alkylarylaminoalkyl oder Alkylarylaminoaryl, wobei die Arylreste einfach oder mehrfach substituiert sein können,
bedeuten und
c) gegebenenfalls ein oder mehrere olefinisch ungesättigte Monomere die strukturell von den Komponenten (a) und (b) verschieden sind,
d) mindestens einen Initiator
entweder (i) in einem Lösungsmittelgemisch, enthaltend Wasser und ein in Wasser lösliches organisches Lösungsmittel mit einem Siedepunkt kleiner 140 °C, löst oder (ii) in einem oder mehreren reinen Alkoholen durch Erhitzen löst und in Lösung polymerisiert, wobei das gebildete Copolymer ebenfalls gelöst bleibt.

2. Verfahren gemäß Anspruch 1, durchgeführt nach Variante (i).

3. Verfahren gemäß Anspruch 1, durchgeführt nach Variante (ii).

4. Verfahren gemäß einem der Ansprüche 1 bis 3, wobei man Komponente (a) in Wasser oder einem Lösungsmittelgemisch enthaltend Wasser und ein in Wasser lösliches organisches Lösungsmittel mit einem Siedpunkt kleiner 140 °C oder in einem oder mehreren reinen Alkoholen durch Erhitzen löst und mit den Komponenten (b), (c) und (d) gelöst in gleichen oder verschiedenen in Wasser löslichen organischen Lösungsmitteln mit einem Siedepunkt kleiner 140 °C mischt und polymerisiert.

5. Verfahren gemäß einem der Ansprüche 1 bis 3, wobei man die Komponente (a) in Wasser oder einem Lösungsmittelgemisch, enthaltend Wasser und ein in Wasser lösliches organisches Lösungsmittel mit einem Siedepunkt kleiner 140 °C, löst und die Komponenten (b), (c) und (d) gemeinsam oder getrennt in mindestens einem in Wasser löslichen organischen Lösungsmittel mit einem Siedepunkt kleiner 140 °C löst, diese Lösung(en) mit der Lösung der Komponente (a) mischt und polymerisiert.

6. Verfahren gemäß einem der Ansprüche 1 bis 3, wobei man die Komponente (a) zur Herstellung einer Lösung der Komponente (a) in einem oder mehreren reinen Alkoholen durch Erhitzen löst und die Komponenten (b), (c) und (d) gemeinsam oder getrennt in mindestens einem in Wasser löslichen organischen Lösungsmittel mit einem Siedepunkt kleiner 140 °C löst, die Lösung(en) mit der Lösung der Komponente (a) mischt und polymerisiert.

7. Verfahren gemäß einem der Ansprüche 1 bis 6, wobei die optionale Komponente (c) aus Acryl- und/oder Methacrylsäure besteht.

8. Verfahren gemäß einem der Ansprüche 1 bis 7, wobei der Anteil der freien Säuregruppen in den Komponenten (a) und gegebenenfalls (c) mindestens 50 %, bezogen auf die Gesamtanzahl an Säuregruppen in den Komponenten (a) und (c), beträgt.

9. Statistisch radikalisches Copolymer, erhältlich mit einem Verfahren gemäß einem der Ansprüche 1 bis 8 durch Polymerisation von
a) mindestens einer olefinisch ungesättigten Sulfonsäure der Formel (I), 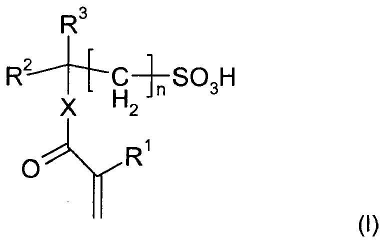 wobei
X NH oder Sauerstoff;
R¹ Methyl oder Wasserstoff;
R² und R³ Methyl oder Wasserstoff und
n 1
bedeuten, Salze davon oder Mischungen aus Säure und Salzen und
b1) mindestens einem olefinisch ungesättigten Monomer der Formel (IIa), 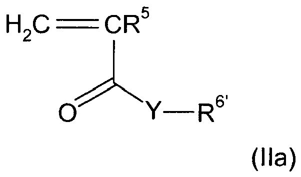 wobei
Y Sauerstoff oder NR⁷;
R⁵ Wasserstoff oder Methyl;
R^{6'} C₁-C₆-Alkyl und
R⁷ Wasserstoff, Alkyl, Aryl, Alkylaryl, Arylalkyl, Alkoxyalkyl, Aryloxyalkyl, Alkoxyaryl, Hydroxyalkyl, (Di)Alkylaminoalkyl, (Di)Alkylaminoaryl, (Di)Arylaminoalkyl, Alkylarylaminoalkyl oder Alkylarylaminoaryl, wobei die Arylreste einfch oder mehrfach substituiert sein können,
bedeuten,
b2) mindestens einem olefinisch ungesättigten Monomer der Formel (IIb) 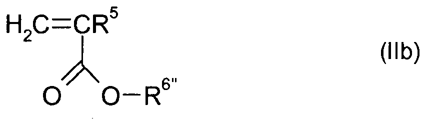 wobei
R⁵ Methyl oder Wasserstoff und
R^{6"} C₇-C₂₀-Alkyl
bedeuten und
c) gegebenenfalls mindestens einem weiteren, strukturell von Komponente (b) verschiedenen olefinisch ungesättigten Monomer.

10. Copolymer gemäß Anspruch 9, wobei zur Polymerisation mindestens zwei strukturell verschiedene Monomere b2 eingesetzt werden.

11. Copolymer gemäß Anspruch 9 oder 10,
wobei
(a) gewählt ist aus Acrylamid-2-methyl-1-propansäure (AMPS) und 2-Sulfoethylmethylacrylat (SEMA), Salzen davon oder Mischungen aus Säure und Salzen und
(b1) gewählt ist aus Verbindungen der Formel (IIa),
worin
Y Sauerstoff oder NR⁷;
R⁵ Wasserstoff oder Methyl:
R^{6'} Wasserstoff oder (C₁-C₄)-Alkyl und
R⁷ Wasserstoff oder (C₁-C₆)-Alkyl
bedeuten;
(b2) gewählt ist aus Verbindungen der Formel (IIb), worin
Y Sauerstoff;
R⁵ Wasserstoff oder Methyl und
R^{6"} (C₁₀-C₂₀)-Alkyl
bedeuten;
und (c) gegebenenfalls gewählt ist aus Acrylsäure und/oder Methacrylsäure.

12. Copolymer gemäß einem der Ansprüche 9 bis 11,
wobei
(a) gewählt ist aus Acrylamid-2-methyl-1-propansäure (AMPS) und 2-Sulfoethylmethylacrylat (SEMA),
(b1) gewählt ist aus Verbindungen der Formel (IIa),
worin
Y Sauerstoff;
R⁵ Wasserstoff oder Methyl und
R^{6'} (C₁-C₄)-Alkyl
bedeuten;
(b2) gewählt ist aus Verbindungen der Formel (IIb),
worin
Y Sauerstoff;
R⁵ Wasserstoff oder Methyl und
R^{6"} Decyl, Dodecyl, Tetradecyl, Hexadecyl, Octadecyl oder Eicosyl
bedeuten;
und (c) gegebenenfalls gewählt ist aus Acrylsäure und/oder Methacrylsäure.

13. Copolymer gemäß einem der Ansprüche 9 bis 12,
wobei
(a) gewählt ist aus Acrylamid-2-methyl-1-propansäure (AMPS) und 2-Sulfoethylmethylacrylat (SEMA),
(b1) gewählt ist aus Verbindungen der Formel (IIa),
worin
Y Sauerstoff;
R⁵ Methyl und
R^{6'} (C₁-C₄)-Alkyl
bedeuten;
(b2) gewählt ist aus Verbindungen der Formel (IIb), worin
Y Sauerstoff;
R⁵ Wasserstoff und
R^{6"} Dodecyl, Tetradecyl, Hexadecyl oder Octadecyl
bedeuten;
und (c) gegebenenfalls gewählt ist aus Acrylsäure und/oder Methacrylsäure.

14. Copolymer gemäß einem der Ansprüche 9 bis 13, wobei die Säuregruppen des Copolymers zu mindestens 50 % (bezogen auf die Gesamtanzahl der Säuregruppen in den Komponenten (a) und (c)) freie Säuregruppen sind.

15. Copolymer gemäß einem der Ansprüche 9 bis 14 mit einem Molgewicht M_{w} im Bereich von 2500 bis 100 000.

16. Verfahren zur Herstellung einer agrochemischen Wirkstoffzusammensetzung, wobei ein oder mehrere Copolymere gemäß einem der Ansprüche 9 bis 15 und mindestens ein Pflanzenschutzwirkstoff sowie gegebenenfalls weitere Zusatzstoffe getrennt voneinander in gleichen oder verschiedenen, bevorzugt miteinander mischbaren Lösungsmitteln gelöst und die so erhaltenen Lösungen gegebenenfalls unter Zugabe weiterer Zusatzstoffe miteinander gemischt werden.

17. Agrochemische Wirkstoffzusammensetzung, enthaltend
(A) mindestens ein statistisches radikalisches Copolymer gemäß einem der Ansprüche 9 bis 15 und
(B) mindestens einen agrochemischen Wirkstoff.

18. Wirkstoffzusammensetzung gemäß Anspruch 17 zur Bekämpfung von phytopathogenen Mikroorganismen, tierischen Schädlingen oder Schadpflanzen.

19. Wirkstoffzusammensetzung gemäß Anspruch 17 oder 18, wobei der Wirkstoff ein Fungizid ist.

20. Verfahren zur Bekämpfung von Schadorganismen aus der Gruppe der phytopathogenen Mikroorganismen, tierischen Schädlinge und Schadpflanzen, wobei man die Schadorganismen, deren Lebensraum oder die zu schützenden Pflanzen, Flächen, Materialien oder Räume mit einer Wirkstoffzusammensetzung gemäß einem der Ansprüche 17 bis 19 behandelt.

## Claims

1. A process for the preparation of random radical copolymers where
a) at least one olefinically unsaturated sulfonic acid of the formula (I), 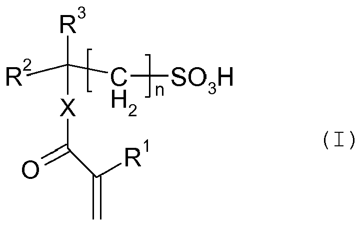 where
n is 0 to 10;
X is O or NR⁵ ;
R¹ is hydrogen or methyl;
R², R³ independently of one another are hydrogen or C₁- to C₆-alkyl and
R⁵ is hydrogen, alkyl, aryl, alkylaryl, arylalkyl, alkoxyalkyl, aryloxyalkyl, alkoxyaryl, hydroxyalkyl, (di)alkylaminoalkyl, (di)alkylaminoaryl, (di)arylaminoalkyl, alkylarylaminoalkyl or alkylarylaminoaryl, it being possible for the aryl radicals to be monosubstituted or polysubstituted,
salts thereof or mixtures of acid and salts and
b) at least two structurally different olefinically unsaturated monomers of the formula (II), 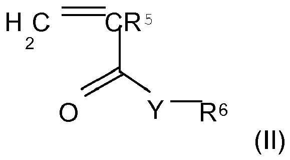 where
Y is O or NR⁷ ;
R⁵ is hydrogen or methyl;
R⁶ is alkyl, hydroxyalkyl, (di)alkylaminoalkyl or (di)alkylaminoaryl and
R⁷ is hydrogen, alkyl, aryl, alkylaryl, arylalkyl, alkoxyalkyl, aryloxyalkyl, alkoxyaryl, hydroxyalkyl, (di)alkylaminoalkyl, (di)alkylaminoaryl, (di)arylaminoalkyl, alkylarylaminoalkyl or alkylarylaminoaryl, it being possible for the aryl radicals to be monosubstituted or polysubstituted,
and
c) optionally, one or more olefinically unsaturated monomers which differ structurally from components (a) and (b),
d) at least one initiator
are dissolved either (i) in a solvent mixture comprising water and a water-soluble organic solvent with a boiling point of less than 140°C or (ii) are dissolved in one or more pure alcohols by heating, and are polymerized in solution, the copolymer formed likewise remaining dissolved.

2. The process according to claim 1, carried out as described in variant (i).

3. The process according to claim 1, carried out as described in variant (ii).

4. The process according to any of claims 1 to 3, wherein component (a) is dissolved by heating in water or a solvent mixture comprising water and a water-soluble organic solvent with a boiling point of less than 140°C or in one or more pure alcohols and the solution is mixed with components (b), (c) and (d), dissolved in identical or different water-soluble organic solvents witih a boiling point of less than 140°C, and the mixture is polymerized.

5. The process according to any of claims 1 to 3, wherein component (a) is dissolved in water or a solvent mixture comprising water and a water-soluble organic solvent with a boiling point of less than 140°C and components (b), (c) and (d) are dissolved jointly or separately in at least one water-soluble organic solvent with a boiling point of less than 140°C, said solution(s) is/are mixed with the solution of component (a), and the mixture is polymerized.

6. The process according to any of claims 1 to 3, wherein component (a) is dissolved by heating in one or more pure alcohols in order to prepare a solution of component (a), and components (b), (c) and (d) are dissolved jointly or separately in at least one water-soluble organic solvent with a boiling point of less than 140°C, said solution(s) is/are mixed with the solution of component (a), and the mixture is polymerized.

7. The process according to any of claims 1 to 6, wherein the optional component (c) is composed of acrylic and/or methacrylic acid.

8. The process according to any of claims 1 to 7, wherein the free acid groups in components (a) and optionally (c) account for at least 50%, based on the total number of acid groups in components (a) and (c).

9. A random radical copolymer, obtainable using a process according to any of claims 1 to 8 by polymerizing
a) at least one olefinically unsaturated sulfonic acid of the formula (I), 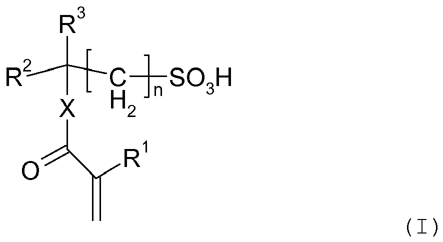 where
X is NH or oxygen;
R¹ is methyl or hydrogen;
R² and R³ are methyl or hydrogen and
n is 1,
salts thereof or mixtures of acid and salts, and
b1) at least one olefinically unsaturated monomer of the formula (IIa), 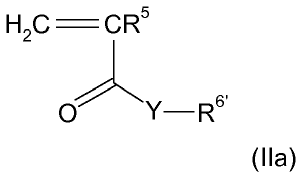 where
Y is oxygen or NR⁷ ;
R⁵ is hydrogen or methyl;
R^{6'} is C₁-C₆-alkyl and
R⁷ is hydrogen, alkyl, aryl, alkylaryl, arylalkyl, alkoxyalkyl, aryloxyalkyl, alkoxyaryl, hydroxyalkyl, (di)alkylaminoalkyl, (di)alkylaminoaryl, (di)arylaminoalkyl, alkylarylaminoalkyl or alkylarylaminoaryl, it being possible for the aryl radicals to be monosubstituted or polysubstituted,
b2) at least one olefinically unsaturated monomer of the formula (IIb), 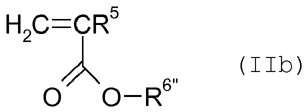 where
R⁵ is methyl or hydrogen and
R^{6"} is C₇-C₂₀-alkyl
and
c) optionally, at least one further olefinically unsaturated monomer which differs structurally from component (b).

10. The copolymer according to claim 9, wherein at least two structurally different monomers b2 are employed for the polymerization.

11. The copolymer according to claim 9 or 10, wherein
(a) is selected from among acrylamido-2-methyl-1-propanesulfonic acid (AMPS) and 2-sulfoethyl methacrylate (SEMA), salts of these or mixtures of acid and salts, and
(b1) is selected from among compounds of the formula (IIa)
in which
Y is oxygen or NR⁷;
R⁵ is hydrogen or methyl;
R⁶ is hydrogen or (C₁-C₄) -alkyl and
R⁷ is hydrogen or (C₁-C₆) -alkyl;
(b2) is selected from among compounds of the formula (IIb)
in which
Y is oxygen;
R⁵ is hydrogen or methyl and
R^{6"} is (C₁₀-C₂₀) -alkyl;
and (c), optionally, is selected from among acrylic acid and/or methacrylic acid.

12. The copolymer according to any of claims 9 to 11, wherein
(a) is selected from among acrylamido-2-methyl-1-propanesulfonic acid (AMPS) and 2-sulfoethyl methacrylate (SEMA),
(b1) is selected from among compounds of the formula (IIa)
in which
Y is oxygen;
R⁵ is hydrogen or methyl and
R^{6'} is (C₁-C₄) -alkyl;
(b2) is selected from among compounds of the formula (IIb)
in which
Y is oxygen;
R⁵ is hydrogen or methyl and
R^{6''} is decyl, dodecyl, tetradecyl, hexadecyl, octadecyl or eicosyl;
and (c), optionally, is selected from among acrylic acid and/or methacrylic acid.

13. The copolymer according to any of claims 9 to 12, wherein
(a) is selected from among acrylamido-2-methyl-1-propanesulfonic acid (AMPS) and 2-sulfoethyl methacrylate (SEMA),
(b1) is selected from among compounds of the formula (IIa)
in which
Y is oxygen;
R⁵ is methyl and
R^{6'} is (C₁-C₄) -alkyl;
(b2) is selected from among compounds of the formula (IIb)
in which
Y is oxygen;
R⁵ is hydrogen and
R^{6"} is dodecyl, tetradecyl, hexadecyl or octadecyl;
and (c), optionally, is selected from among acrylic acid and/or methacrylic acid.

14. The copolymer according to any of claims 9 to 13, wherein the acid groups of the copolymer are to at least 50% (based on the total number of acid groups in components (a) and (c)) free acid groups.

15. The copolymer according to any of claims 9 to 14 with a molecular weight MW in the range of from 2500 to 100 000.

16. A process for the preparation of an agrochemical active substance composition, wherein one or more copolymers according to any of claims 9 to 15 and at least one plant protectant and, optionally, further additives are dissolved separately from one another in identical or different solvents, preferably in solvents which are miscible with one another, and the resulting solutions are mixed with one another, optionally with addition of further additives.

17. An agrochemical active substance composition, comprising
(A) at least one random radical copolymer according to any of claims 9 to 15 and
(B) at least one agrochemical active substance.

18. The active substance composition according to claim 17 for controlling phytopathogenic microorganisms, animal pests or harmful plants.

19. The active substance composition according to claim 17 or 18, wherein the active substance is a fungicide.

20. A method for controlling harmful organisms from the group of the phytopathogenic microorganisms, animal pests and harmful plants, wherein the harmful organisms, their environment, or the plants, areas, materials or spaces to be protected are treated with an active substance composition according to any of claims 17 to 19.

## Revendications

1. Procédé de préparation de copolymères radicalaires statistiques, dans lequel on dissout
a) au moins un acide sulfonique oléfiniquement insaturé de formule (I) 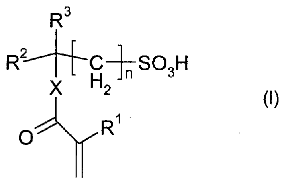 où
n vaut 0 à 10 ;
X signifie O ou NR⁵ ;
R¹ signifie hydrogène ou méthyle ;
R², R³ indépendamment l'un de l'autre, signifient hydrogène ou C₁-C₆-alkyle ;
R⁵ signifie hydrogène, alkyle, aryle, alkylaryle, arylalkyle, alcoxyalkyle, aryloxyalkyle, alcoxyaryle, hydroxyalkyle, (di)alkylaminoalkyle, (di)alkylaminoaryle, (di)arylaminoalkyle, alkylarylaminoalkyle ou alkylarylaminoaryle, les radicaux aryle pouvant être monosubstitués ou polysubstitués,
des sels de celui-ci ou des mélanges d'acide et de sels et
b) au moins deux monomères oléfiniquement insaturés structurellement différents de formule (II), 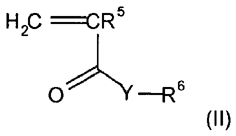 où
Y signifie O ou NR⁷ ;
R⁵ signifie hydrogène ou méthyle ;
R⁶ signifie alkyle, hydroxyalkyle, (di)alkylaminoalkyle ou (di)alkylaminoaryle et
R⁷ signifie hydrogène, alkyle, aryle, alkylaryle, arylalkyle, alcoxyalkyle, aryloxyalkyle, alcoxyaryle, hydroxyalkyle, (di)alkylaminoalkyle, (di)alkylaminoaryle, (di)arylaminoalkyle, alkylarylaminoalkyle ou alkylarylaminoaryle, les radicaux aryle pouvant être monosubstitués ou polysubstitués,
et
c) le cas échéant un ou plusieurs monomères oléfiniquement insaturés, qui sont structurellement différents des composants (a) et (b),
d) au moins un initiateur,
soit (i) dans un mélange de solvants, contenant de l'eau et un solvant organique soluble dans l'eau présentant un point d'ébullition inférieur à 140°C, soit (ii) dans un ou plusieurs alcools purs par chauffage et on polymérise en solution, le copolymère formé restant également à l'état dissous.

2. Procédé selon la revendication 1, réalisé selon la variante (i).

3. Procédé selon la revendication 1, réalisé selon la variante (ii).

4. Procédé selon l'une quelconque des revendications 1 à 3, le composant (a) étant dissous dans l'eau ou dans un mélange de solvants contenant de l'eau et un solvant organique soluble dans l'eau, présentant un point d'ébullition inférieur à 140°C ou dans un ou plusieurs alcools purs par chauffage, puis mélangé avec les composants (b), (c) et (d), dissous dans les mêmes solvants organiques solubles dans l'eau ou des solvants organiques solubles dans l'eau différents présentant un point d'ébullition inférieur à 140°C, puis on polymérise.

5. Procédé selon l'une quelconque des revendications 1 à 3, le composant (a) étant dissous dans l'eau ou dans un mélange de solvants contenant de l'eau et un solvant organique soluble dans l'eau, présentant un point d'ébullition inférieur à 140°C et les composants (b), (c) et (d) étant dissous, ensemble ou séparément, dans au moins un solvant organique soluble dans l'eau présentant un point d'ébullition inférieur à 140°C, cette/ces solution(s) étant mélangée(s) avec la solution du composant (a) puis on polymérise.

6. Procédé selon l'une quelconque des revendications 1 à 3, le composant (a) étant dissous dans un ou plusieurs alcools purs par chauffage en vue de préparer une solution du composant (a) et les composants (b), (c) et (d) étant dissous, ensemble ou séparément, dans au moins un solvant organique soluble dans l'eau présentant un point d'ébullition inférieur à 140°C, cette/ces solution(s) étant mélangée(s) avec la solution du composant (a) puis on polymérise.

7. Procédé selon l'une quelconque des revendications 1 à 6, le composant (c) éventuel étant constitué d'acide acrylique et/ou méthacrylique.

8. Procédé selon l'une quelconque des revendications 1 à 7, la proportion des groupes acides libres dans les composants (a) et éventuellement (c) étant d'au moins 50%, par rapport au nombre total de groupes acides dans les composants (a) et (c).

9. Copolymère radicalaire statistique, pouvant être obtenu par un procédé selon l'une quelconque des revendications 1 à 8 par polymérisation de
a) au moins un acide sulfonique oléfiniquement insaturé de formule (I), 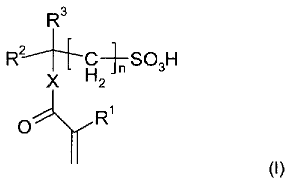 où
X signifie NH ou oxygène ;
R¹ signifie méthyle ou hydrogène ;
R² et R³ signifient méthyle ou hydrogène et
n vaut 1
des sels de celui-ci ou des mélanges d'acide et de sels et
b1) au moins un monomère oléfiniquement insaturé de formule (IIa) 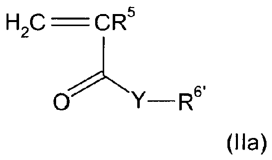 où
Y signifie oxygène ou NR⁷ ;
R⁵ signifie hydrogène ou méthyle ;
R^{6'} signifie C₁-C₆-alkyle et
R⁷ signifie hydrogène, alkyle, aryle, alkylaryle, arylalkyle, alcoxyalkyle, aryloxyalkyle, alcoxyaryle, hydroxyalkyle, (di)alkylaminoalkyle, (di)alkylaminoaryle, (di)arylaminoalkyle, alkylarylaminoalkyle ou alkylarylaminoaryle, les radicaux aryle pouvant être monosubstitués ou polysubstitués,
b2) au moins un monomère oléfiniquement insaturé de formule (IIb) 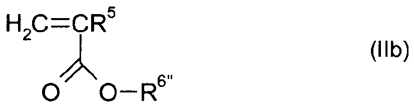 où
R⁵ signifie méthyle ou hydrogène et
R^{6"} signifie C₇-C₂₀-alkyle
et
c) le cas échéant au moins un autre monomère oléfiniquement insaturé structurellement différent du composant (b).

10. Copolymère selon la revendication 9, en utilisant pour la polymérisation au moins deux monomères b2 structurellement différents.

11. Copolymère selon la revendication 9 ou 10, où
(a) est choisi parmi l'acide acrylamido-2-méthyl-1-propanesulfonique (AMPS) et le méthacrylate de 2-sulfoéthyle (SEMA), leurs sels ou les mélanges d'acide et de sels et
(b1) est choisi parmi les composés de formule (IIa),
dans laquelle
Y signifie oxygène ou NR⁷ ;
R⁵ signifie hydrogène ou méthyle ;
R^{6'} signifie hydrogène ou (C₁-C₄) -alkyle et
R⁷ signifie hydrogène ou (C₁-C₆) -alkyle,
(b2) est choisi parmi les composés de formule (IIb),
dans laquelle
Y signifie oxygène ;
R⁵ signifie hydrogène ou méthyle et
R^{6"} signifie (C₁₀-C₂₀)-alkyle,
et
(c) est le cas échéant choisi parmi l'acide acrylique et/ou l'acide méthacrylique.

12. Copolymère selon l'une quelconque des revendications 9 à 11, où
(a) est choisi parmi l'acide acrylamido-2-méthyl-1-propanesulfonique (AMPS) et le méthacrylate de 2-sulfoéthyle (SEMA),
(b1) est choisi parmi les composés de formule (IIa),
dans laquelle
Y signifie oxygène ;
R⁵ signifie hydrogène ou méthyle et
R⁶ signifie (C₁-C₄) -alkyle,
(b2) est choisi parmi les composés de formule (IIb),
dans laquelle
Y signifie oxygène ;
R⁵ signifie hydrogène ou méthyle et
R^{6"} signifie décyle, dodécyle, tétradécyle, hexadécyle, octadécyle ou eicosyle
et
(c) est le cas échéant choisi parmi l'acide acrylique et/ou l'acide méthacrylique.

13. Copolymère selon l'une quelconque des revendications 9 à 12, où
(a) est choisi parmi l'acide acrylamido-2-méthyl-1-propanesulfonique (AMPS) et le méthacrylate de 2-sulfoéthyle (SEMA),
(b1) est choisi parmi les composés de formule (IIa),
dans laquelle
Y signifie oxygène ;
R⁵ signifie méthyle ; et
R^{6'} signifie (C₁-C₄)-alkyle,
(b2) est choisi parmi les composés de formule (IIb),
dans laquelle
Y signifie oxygène ;
R⁵ signifie hydrogène et
R^{6"} signifie dodécyle, tétradécyle, hexadécyle ou octadécyle
et
(c) est le cas échéant choisi parmi l'acide acrylique et/ou l'acide méthacrylique.

14. Copolymère selon l'une quelconque des revendications 9 à 13, les groupes acides du copolymère étant à raison d'au moins 50% (par rapport au nombre total de groupes acides dans les composants (a) et (c)), des groupes acides libres.

15. Copolymère selon l'une quelconque des revendications 9 à 14, présentant un poids moléculaire M_{w} dans la plage de 2500 à 100 000.

16. Procédé pour la préparation d'une composition agrochimique de substances actives, un ou plusieurs copolymères selon l'une quelconque des revendications 9 à 15 et au moins une substance active de phytoprotection ainsi que le cas échéant d'autres additifs étant dissous séparément les uns des autres dans des solvants identiques ou différents, de préférence miscibles les uns avec les autres, et les solutions ainsi obtenues étant mélangées les unes avec les autres, le cas échéant avec addition d'autres additifs.

17. Composition agrochimique de substances actives, contenant
(A) au moins un copolymère radicalaire statistique selon l'une quelconque des revendications 9 à 15 et
(B) au moins une substance active agrochimique.

18. Composition de substances actives selon la revendication 17 pour lutter contre des microorganismes phytopathogènes, des organismes nuisibles animaux ou des plantes nuisibles.

19. Composition de substances actives selon la revendication 17 ou 18, la substance active étant un fongicide.

20. Procédé pour lutter contre des organismes nuisibles du groupe des microorganismes phytopathogènes, des organismes nuisibles animaux et des plantes nuisibles, en traitant les organismes nuisibles, leur espace de vie ou les plantes, les surfaces, les matériaux ou les espaces à protéger par une composition de substances actives selon l'une quelconque des revendications 17 à 19.
